# EUROPEAN PATENT APPLICATION

(11) **EP 4 631 680 A1**
(43) Date of publication of application: **15.10.2025**
(21) Application number: 23900590.3
(22) Date of filing: 01.12.2023
(51) Int. Cl.: B25J 15/06, B25J 13/08, B25J 15/10

(54) **CONTROL SYSTEM FOR ROBOT AND CONTROL PROGRAM FOR ROBOT**

(30) Priority: 07.12.2022 JP 2022195945; 22.02.2023 JP 2023026590; 28.02.2023 JP 2023029478; 09.03.2023 JP 2023036898; 14.03.2023 JP 2023040062
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/043189
(87) International publication number: WO 2024/122475

(57) **Abstract**

A control system for a robot includes plural types of suctioning pads that are selectively provided for each of a palm portion and a finger portion of a first gripping portion and are capable of sucking, holding, and gripping a target object with different sucking areas, and a control unit that selects any one of a first function of gripping the target object by the first gripping portion, a second function of gripping the target object by a second gripping portion, and a third function of using both the first function and the second function as a function of holding and gripping the target object by a property including at least a shape and a weight of the target object, and controls an operation of gripping the target object.

## Description

### Technical Field

The present disclosure relates to a control system for a robot and a control program for the robot.

### Background Art

In a production line of a factory, a humanoid robot for automatically performing a task is used. Japanese Patent Application Laid-Open (JP-A) No. 2019-093506 discloses posture control of a humanoid robot.

WO2011/001569 discloses a robot arm that is driven by an elastic actuator and has a plurality of joints. The robot arm is controlled by a hand tip support member that is disposed at a hand tip of the robot arm and supports the robot arm by coming into contact with a support surface, and a control unit that controls a contact force between the hand tip support member and the support surface and simultaneously controls a position and a posture of a hand tip of the robot arm.

### SUMMARY OF INVENTION

### Technical Problem

However, in a picking task in a warehouse by a conventional humanoid robot, for example, in cases in which loads (for example, shampoos, conditioners, cosmetics, toothpastes, cup noodles, or confectionery bags having different shapes, weights, hardnesses, or fragrances) are picked up from a shelf on which the loads are displayed, and the loads are accommodated in a predetermined package (for example, a box or the like), packing relies on the hands of a person.

Even though the structure of a gripping portion of a robot corresponds to a finger type, the motion of a finger and an arm is slow, so that productivity is low.

In view of the above circumstances, an object of the disclosure is to obtain a control system for a robot and a control program for the robot capable of quickly and reliably performing a series of tasks including checking of a position of a load, grasping, and gripping by a gripping portion.

### Solution to Problem

According to the disclosure, there is provided a control system for a robot including a first gripping portion including a palm portion as a base for holding a target object and a plurality of finger portions radially extending from the palm portion, and a second gripping portion including a holding body capable of gripping and holding the target object, the robot being capable of gripping the target object by the first gripping portion and the second gripping portion. The control system includes: a plurality of types of suctioning pads that are selectively provided for each of the palm portion and the finger portions of the first gripping portion and are capable of sucking and holding the target object with different sucking areas; and a control unit that selects any one of a first function of gripping the target object by the first gripping portion, a second function of gripping the target object by the second gripping portion, and a third function using both the first function and the second function as a function of holding the target object by a property including at least a shape and a weight of the target object, and controls an operation of gripping the target object.

According to the disclosure, the control unit selects any one of the first function of gripping the target object by the first gripping portion, the second function of gripping the target object by the second gripping portion, and the third function of using both the first function and the second function as the function of holding the target object by the property including at least the shape and the weight of the target object, and controls the operation of gripping the target object.

As a result, it is possible to quickly and reliably perform a series of tasks including checking of the position of the target object (may be simply referred to as a "load" below), grasping, and gripping by the gripping portion.

In the disclosure, in the first gripping portion, a plurality of the finger portions are provided, a suctioning pad having a smaller diameter than other suctioning pads is attached to a tip portion of at least one finger portion, and a suctioning pad having a larger diameter than other suctioning pads is attached to a tip portion of another finger portion other than the one finger portion, and the control unit selects any one of the first function, the second function, and the third function based on the property and controls the operation of gripping the target object.

Since the gripping function conforming to the property of the target portion of one robot is provided, selection of a robot is unnecessary, and it is possible to improve efficiency of a picking task.

In the disclosure, in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion, the control unit classifies the target object into an extra-large size, a large size, a medium size, a small size, and an extra-small size based on the property, and the control unit selects gripping by using the holding body provided at the second gripping portion in a case in which the target object has the extra-large size, selects gripping by using the suctioning pad provided at the palm portion in a case in which the target object has the large size, selects gripping by using the suctioning pad that has the large diameter and is provided at the tip portions of the second finger portion and the third finger portion in a case in which the target object has the medium size, selects gripping by using the suctioning pad that has the large diameter and is provided at the tip portion of the second finger portion or the third finger portion in a case in which the target object has the small size, and selects gripping by using the suctioning pad that has the small pad and is provided at the tip portion of the first finger portion in a case in which the target object has the extra-small size.

Since the gripping function conforming to the property of the target portion of one robot is provided, selection of a robot is unnecessary, and it is possible to improve efficiency of a picking task.

In the disclosure, a suctioning pad having the same shape as either the suctioning pad having a large diameter or the suctioning pad having a small diameter is applied to the holding body of the second gripping portion.

By using the suctioning pad also for the second gripping portion, control is facilitated.

In the disclosure, a palm sensor unit that is provided in the first gripping portion and the second gripping portion and detects target object information including a shape and a position of the target object is further provided, and the palm sensor unit includes a camera that captures an image of the target object and identifies a type of the target object, and a motion processing unit that specifies the position of the target object.

The camera identifies the captured target object based on the captured image information. That is, the camera has a role of acquiring information for specifying the type (for example, a shape, a size, and hardness) of the target object.

The motion processing unit (MoPU) outputs, as motion information, vector information of a motion along a predetermined coordinate axis of a point indicating an existence position of the target object. That is, the motion information output from the MoPU includes only information indicating a motion (for example, a moving direction and a moving speed) on coordinate axes (that is, an x axis, a y axis, and a z axis) of a center point (or a center point of gravity) of the target object. That is, it is possible to accurately guide a trajectory in a case in which the gripping portion approaches the target object.

A control program for a robot according to the disclosure causes a computer to operate as the control unit.

In the disclosure, it is determined whether or not the target object is within a predetermined criterion capable of being gripped by a single robot, by using weight information among the properties of the target object, and in a case in which the predetermined criterion is exceeded, a plurality of robots are gathered and the target object is gripped in cooperation with the plurality of robots.

In the case of a target object exceeding a predetermined criterion (for example, overweight) as a target object to be gripped by a single robot, it is possible to handle a target object such as an overweight object by a plurality of robots performing gripping in cooperation.

In the disclosure, the control unit sets a gripping point of each of the plurality of robots for the target object, calculates a load ratio shared by each robot at the set gripping point based on the property of the target object, and selects the function of gripping the target object for each robot based on a calculation result.

Since a load at the time of gripping the target object is different depending on a gripping point of each robot, it is possible to select the function at the time of gripping based on each load ratio.

In the disclosure, in a case in which the plurality of robots grip and convey the target object, a conveyance route of each robot is set such that an inertial force applied to the target object is minimized.

For example, an inertial force due to deceleration and acceleration may be applied to the target object at the time of right turn, left turn, or the like, and a gripping state may change. Thus, by setting a conveyance route of the robot such that the target object moves along a curve trajectory having a predetermined curvature radius, it is possible to travel without changing the gripping state.

According to the disclosure, there is provided a control system for a robot including a standard gripping portion that is detachably mounted on an arm portion of the robot and grips a target object conforming to a predetermined criterion; and one or a plurality of extra gripping portions that are detachably attached to the arm portion and grip a target object not conforming to the criterion. The control system includes a determination unit that determines whether or not the target object conforms to a predetermined standard; and a control unit that controls an operation of mounting the standard gripping portion on the arm portion in a case in which a determination result of the determination unit conforms to the standard, and control an operation of mounting the extra gripping portion on the arm portion and gripping the target object in a case in which the determination result of the determination unit does not conform to the standard.

According to the disclosure, the control unit controls the operation of mounting the standard gripping portion on the arm portion in a case in which the determination result of the determination unit that determines whether or not the target object conforms to the predetermined standard conforms to the standard, and the operation of mounting the extra gripping portion on the arm portion in a case in which the determination result of the determination unit does not conform to the standard. The control unit controls the operation of gripping the target object.

As a result, even in the case of a target object that does not conform to the standard, it is possible to quickly and reliably perform a series of tasks of checking of a position of a load, grasping, and gripping by the gripping portion.

In the disclosure, a plurality of the arm portions are provided, and an attachment and detachment operation of the standard gripping portion or the extra gripping portion to/from one of the arm portions is executed by using the standard gripping portion or the extra gripping portion mounted on another of the arm portions.

In the attachment and detachment operation of the standard gripping portion or the extra gripping portion, separate attaching and detaching jigs and the like are unnecessary.

In the disclosure, a sensor unit that is provided in the standard gripping portion and the extra gripping portion and detects target object information including a type, a shape, or a size of the target object and a position of the target object is further provided, and
the determination unit determines whether or not the target object conforms to the standard, based on the target object information detected by the sensor unit.

Based on the detection result (for example, target object information including a type, a shape, or a size of a target object and a position of the target object) in the sensor unit, it is possible to determine conformity or non-conformity of the standard.

In the disclosure, the determination unit makes a determination based on the target object information detected by the sensor unit or a weight that can be known in advance.

In a case in which the weight of the target object can be known in advance, conformity or non-conformity may be determined by the weight. The weight may be acquired by using a product-weight collation table or the like based on target object information (for example, a product type).

In the disclosure, the standard gripping portion includes a first gripping portion including a palm portion serving as a base for gripping the target object and a plurality of finger portions radially extending from the palm portion, and to which a suctioning pad capable of sucking and gripping the target object with a different sucking area is attached for each of the palm portion and the finger portions, and a second gripping portion including a holding body capable of gripping and gripping the target object, and in the gripping of the target object by the standard gripping portion, the control unit selects any one of a first function of gripping the target object by the first gripping portion, a second function of gripping the target object by the second gripping portion, and a third function of using both the first function and the second function, as a function of gripping the target object by an attribute including at least a shape and a weight of the target object, and controls an operation of gripping the target object.

The control unit selects any one of the first function of gripping the target object by the first gripping portion, the second function of gripping the target object by the second gripping portion, and the third function of using both the first function and the second function as the function of gripping the target object by the attribute including at least the shape and the weight of the target object, and controls the operation of gripping the target object.

As a result, it is possible to quickly and reliably perform a series of tasks including checking the position of the target object, grasping, and gripping by the gripping portion.

In the disclosure, in the gripping of the target object by the standard gripping portion, in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion, the control unit classifies the target object into an extra-large size, a large size, a medium size, a small size, and an extra-small size based on the attribute, and the control unit selects gripping by using the holding body provided at the second gripping portion in a case in which the target object has the extra-large size, selects gripping by using the suctioning pad provided at the palm portion in a case in which the target object has the large size, selects gripping by using the suctioning pad that has the large diameter and is provided at the tip portions of the second finger portion and the third finger portion in a case in which the target object has the medium size, selects gripping by using the suctioning pad that has the large diameter and is provided at the tip portion of the second finger portion or the third finger portion in a case in which the target object has the small size, and selects gripping by using the suctioning pad that has the small diameter and is provided at the tip portion of the first finger portion in a case in which the target object has the extra-small size.

Since the gripping function conforming to the attribute of the target portion of one robot is provided, selection of a robot is unnecessary, and it is possible to improve efficiency of a picking task.

According to the disclosure, a control system for a robot causes a computer to operate as the determination unit and the control unit of the control system for the robot.

According to the disclosure, the normal task control unit selects at least one of the gripping portions and controls a gripping task including gripping of a first target object designated from target objects.

In a case in which a predetermined condition is satisfied during execution of a task by the normal task control unit, the simultaneous task control unit selects another of the gripping portions and controls a gripping task including gripping of a second target object designated from the target objects.

As a result, it is possible to improve the efficiency of the gripping task.

In the disclosure, the predetermined condition is a condition under which the second target object can be gripped, the condition being found from task situation information including position information of the robot and gripping information for specifying the gripping portion that grips the target object, work schedule information under a task environment of the robot, and attribute information of a target object as a gripping target.

In a case in which the first target object is gripped, whether or not the second target object can be gripped can be found from task situation information including position information of the robot and gripping information for specifying the gripping portion that grips the target object, work schedule information under a task environment of the robot, and attribute information of a target object as a gripping target.

In the disclosure, in a warehouse including a storage base on which a plurality of shelves in which a plurality of the target objects are stored are displayed, and a picking station that executes unloading work for taking out the target object from the shelf and loading work for accommodating the target object in the shelf, the robot is disposed in the picking station, and a storage base management server that instructs the robot on the unloading work including the gripping task and the loading work functions as the normal task control unit and the simultaneous task control unit, thereby causing the robot to execute the gripping task of the target object.

The robot is disposed in the picking station in the warehouse including the storage base that stores a plurality of shelves in which a plurality of objects are accommodated, and the picking station that executes unloading work for taking out the target object from the shelf and loading work for accommodating the target object in the shelf.

In this warehouse, the movement of the shelf between the storage base and the picking station (for example, movement using a conveyance device), and the unloading work and the loading work in the picking station are collectively managed by the storage base management server in accordance with a predetermined work schedule.

Since the storage base management server functions as the normal task control unit and the simultaneous task control unit, the normal task and the simultaneous task can be performed as the gripping task in the picking station.

In the disclosure, the plurality of gripping portions include a first gripping portion including a palm portion serving as a base and a plurality of finger portions radially extending from the palm portion, the first gripping portion being capable of gripping the target object by either suction or grasping, and a second gripping portion capable of sucking to and gripping the target object with a maximum suction force, and the normal task control unit and the simultaneous task control unit select any one of a first function of gripping the target object by the first gripping portion, a second function of gripping the target object by the second gripping portion, and a third function of using both the first function and the second function as a function of gripping the target object by an attribute including at least a shape and a weight of the target object.

The normal task instruction control unit and the simultaneous task control unit select any one of the first function of gripping the target object by the first gripping portion, the second function of gripping the target object by the second gripping portion, and the third function of using both the first function and the second function as the function of gripping the target object by the attribute including at least the shape and the weight of the target object.

As a result, it is possible to quickly and reliably perform a series of tasks including checking the position of the target object, grasping, and gripping by the gripping portion.

In the disclosure, in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion, the normal task control unit and the simultaneous task control unit classify the target object into an extra-large size, a large size, a medium size, a small size, and an extra-small size based on the attribute, and the normal task control unit and the simultaneous task control unit select gripping by using the second gripping portion in a case in which the target object has the extra-large size, select gripping by using the suctioning pad provided at the palm portion in a case in which the target object has a large size, select gripping by using the suctioning pad that has the large diameter and is provided at the tip portions of the second finger portion and the third finger portion in a case in which the target object has the medium size, select gripping by using the suctioning pad that has the large diameter and is provided at the tip portion of the second finger portion or the third finger portion in a case in which the target object has the small size, and select gripping by using the suctioning pad that has the small diameter and is provided at the tip portion of the first finger portion in a case in which the target object has the extra-small size.

Since the gripping function conforming to the attribute of the target portion of one robot is provided, selection of a robot is unnecessary, and it is possible to improve efficiency of a picking task.

In the disclosure, a sensor unit that is provided in the gripping portion and detects target object information including a shape and a position of the target object is further provided, and the sensor unit includes a camera that captures an image of the target object and identifies a type of the target object, and a motion processing unit that specifies the position of the target object.

Based on the detection result (for example, target object information including a type, a shape, or a size of a target object and a position of the target object) in the sensor unit, it is possible to determine conformity or non-conformity of the standard.

According to the disclosure, a control system for a robot causes a computer to operate as the normal task control unit and the simultaneous task control unit.

According to the disclosure, there is provided a control system for a robot capable of gripping a target object by using a first gripping portion including a palm portion serving as a base for gripping the target object and a plurality of finger portions attached to the palm portion, and a second gripping portion including a holding body capable of gripping and holding the target object. The control system includes: a plurality of types of suctioning pads that are selectively provided for each of the palm portion and the finger portions of the first gripping portion and are capable of sucking and gripping the target object with different sucking areas; a sensor unit that is provided in the first gripping portion and the second gripping portion and detects at least shape information of the target object; a selection unit that selects any one of a first function of gripping the target object by the first gripping portion, a second function of gripping the target object by the second gripping portion, and a third function of using both the first function and the second function as a function of gripping the target object based on weight information of the target object registered in advance; a control unit that controls an operation of gripping the target object based on the function selected by the selection unit; a determination unit that determines whether or not shape information of the target object detected by the sensor unit during an approaching operation to the target object in a gripping operation by the control unit is within an allowable range of the function of gripping the target object selected by the selection unit; and a change unit that changes the function of gripping the target object in a case in which the determination unit determines that the shape information is out of the allowable range.

According to the disclosure, the selection unit selects any one of the first function of gripping the target object by the first gripping portion, the second function of gripping the target object by the second gripping portion, and the third function of using both the first function and the second function as the function of gripping the target object, based on the weight information of the target object registered in advance.

The control unit controls the operation of gripping the target object based on the function selected by the selection unit.

Here, the determination unit determines whether or not the shape information of the target object detected by the sensor unit during the approaching operation to the target object in the gripping operation by the control unit is within an allowable range of the function of gripping the target object selected by the selection unit, and the change unit changes the function of gripping the target object in a case in which the determination unit determines that the shape information is out of the allowable range.

As a result, it is possible to quickly and reliably perform a series of tasks including checking the position of a load, grasping, and gripping by the gripping portion.

In the disclosure, the determination unit makes a determination based on a table in which the function of gripping the target object and the allowable range of the shape information of the target object are associated with each other.

By using the table in which the function of gripping the target object and the allowable range of the shape information of the target object are associated with each other in advance, it is possible to easily determine whether or not gripping is performed within an allowable range based on the shape information.

In the disclosure, in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion, the control unit classifies the target object into an extra-large size, a large size, a medium size, a small size, and an extra-small size as a weight classification size based on the weight information, and the control unit selects gripping by using the holding body provided at the second gripping portion in a case in which the target object has the extra-large size, selects gripping by using the suctioning pad provided at the palm portion in a case in which the target object has the large size, selects gripping by using the suctioning pad that has the large diameter and is provided at the tip portions of the second finger portion and the third finger portion in a case in which the target object has the medium size, selects gripping by using the suctioning pad that has the large diameter and is provided at the tip portion of the second finger portion or the third finger portion in a case in which the target object has the small size, and selects gripping by using the suctioning pad that has the small diameter and is provided at the tip portion of the first finger portion in a case in which the target object has the extra-small size.

Since the gripping function conforming to the attribute of the target portion of one robot is provided, selection of a robot is unnecessary, and it is possible to improve efficiency of a picking task.

According to the disclosure, a control program for a robot causes a computer to operate as the selection unit, the control unit, the determination unit, and the change unit.

The above summary of the disclosure does not enumerate all the necessary features of the disclosure. Further, a subcombination of these feature groups can also be included in the invention.

### Advantageous Effects of Invention

As described above, according to the disclosure, it is possible to quickly and reliably perform a series of tasks of checking of a position of a load by the gripping portion, grasping, and holding.

### BRIEF DESCRIPTION OF DRAWINGS

Fig. 1 is a front view of a humanoid robot according to a first embodiment.
Fig. 2 is a side view of the humanoid robot according to the first embodiment.
Fig. 3A is a front view of a palm side of a gripping portion on a left hand side according to the first embodiment.
Fig. 3B is a front view of the palm side of the gripping portion on a right hand side according to the first embodiment.
Fig. 3C is a perspective view of a suctioning pad attached to the gripping portion according to the first embodiment.
Fig. 4A is a perspective view of the gripping portion on the left hand side according to the first embodiment.
Fig. 4B is a perspective view of the gripping portion on the right hand side according to the first embodiment.
Fig. 5 is a diagram schematically illustrating an example of a functional configuration of the humanoid robot.
Fig. 6 is a diagram schematically illustrating an example of a process routine executed by an information processing device.
Fig. 7 is a flowchart illustrating a procedure of gripping control in a case in which an object is gripped by the gripping portion, in conjunction with the whole operation of the humanoid robot.
Fig. 8 is a control flowchart illustrating a selection process routine of the gripping portion and the suctioning pad in Step 160 in Fig. 7.
Fig. 9 is a control flowchart illustrating a selection process routine of a gripping portion and a suctioning pad according to a second embodiment.
Fig. 10 is a control flowchart illustrating details of an out-of-predetermined criterion process subroutine in Step 194 in Fig. 9.
Fig. 11 is a plan view illustrating a state in which two humanoid robots gripping one load are about to reach a crank-shaped conveyance path, according to a modification example of the second embodiment.
Fig. 12 is a control flowchart illustrating a traveling route setting process routine in a case in which a predetermined criterion is not satisfied, according to the modification example of the second embodiment.
Fig. 13 is a front view of a humanoid robot according to a third embodiment.
Fig. 14 is a side view of the humanoid robot according to the third embodiment.
Fig. 15A is a front view of an extra gripping portion stored in a holder according to the third embodiment.
Fig. 15B is a perspective view of an extra gripping portion and a front view of a load gripped by each extra gripping portion.
Fig. 15C is a perspective view of an extra gripping portion and a front view of a load gripped by each extra gripping portion.
Fig. 15D is a perspective view of an extra gripping portion and a front view of a load gripped by each extra gripping portion.
Fig. 16 is a control flowchart illustrating a selection process routine of the gripping portion and a suctioning pad according to the third embodiment.
Fig. 17 is a control flowchart illustrating details of an extra-gripping-portion application process subroutine in Step 1194 in Fig. 16.
Fig. 18A is a perspective view of a storage base according to a fourth embodiment.
Fig. 18B is an enlarged perspective view of an accommodation space part of a shelf in Fig. 18A.
Fig. 19 is a functional block diagram for executing simultaneous progress task control executed in cooperation between a storage base management server and each information processing device of the humanoid robot.
Fig. 20 is a flowchart illustrating a main routine of normal task instruction control based on a work schedule by the storage base management server.
Fig. 21 is a control flowchart illustrating a flow of a simultaneous progress work instruction from determination of whether or not simultaneous progress is possible to an instruction of simultaneous progress to a specific humanoid robot, which is executed by appropriately interrupting a main routine executed by the storage base management server.
Fig. 22 is a flowchart illustrating a main routine of work instruction control based on a work schedule by a storage base management server according to a fifth embodiment.
Fig. 23 is a functional block diagram for controlling tasks related to unloading work and loading work, which are executed in cooperation between the storage base management server and each information processing device of a humanoid robot.
Fig. 24 is a diagram schematically illustrating an example of computer hardware that functions as the information processing device.

### DESCRIPTION OF EMBODIMENTS

Hereinafter, the disclosure will be described through embodiments, but the following embodiments do not limit the disclosure according to the claims. In addition, not all combinations of features described in the embodiments are essential to the solution of the disclosure.

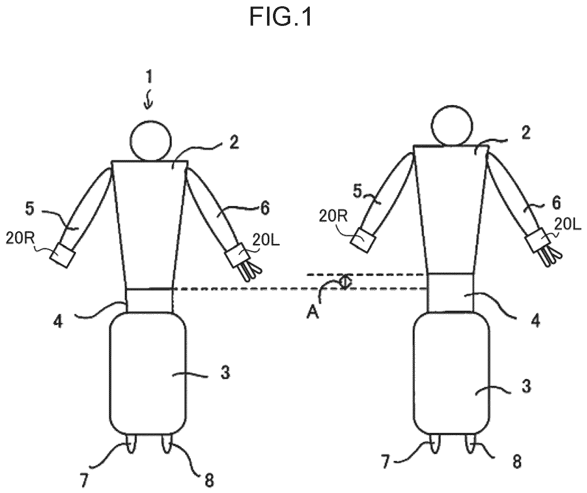

Fig. 1 is a front view of a humanoid robot according to the present embodiment. As illustrated in Fig. 1, a humanoid robot 1 according to the present embodiment includes an upper body 2, a leg portion 3, and a joining portion 4 that rotatably joins the upper body 2 to the leg portion 3. For example, the humanoid robot 1 is disposed in a production line or the like of a factory, and performs a task on a line including a shelf on which a target object (for example, a load as a picking target) is displayed, a target object (for example, a falling object) on a floor, or the like. The task includes packing of accommodating a gripped load 100 in a predetermined housing (for example, corrugated cardboard) in addition to picking of gripping the load 100 from the shelf.

The upper body 2 has two arm portions 5 and 6. The arm portions 5 and 6 are rotatably attached to the left and right of the upper body 2. A gripping portion 20 for gripping an object is attached to the tips of the arm portions 5 and 6. Details of the gripping portion 20 will be described later. The number of arm portions is not limited to two, and may be one or three or more.

Two wheels 7 and 8 are attached to a lower portion of the leg portion 2, and the leg portion 2 is movable on a floor on which the humanoid robot 1 is disposed.

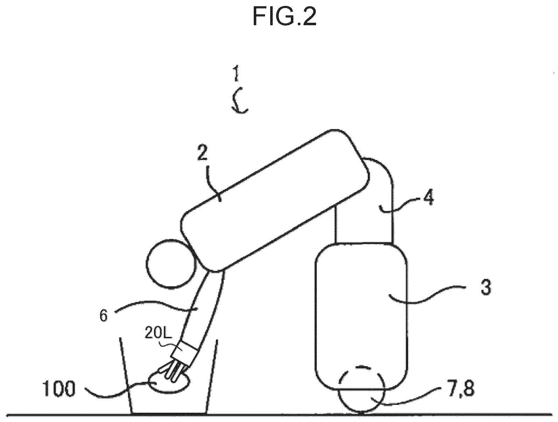

The joining portion 4 rotatably joins the upper body 2 and the leg portion 3. Therefore, the upper body 2 can be tilted forward and backward with respect to the leg portion 3. Therefore, as illustrated in Fig. 2, the humanoid robot 1 according to the present embodiment can tilt the upper body 2 forward with respect to the leg portion 3 to pick up a load placed on a shelf, an object placed on the floor, and an object dropped on the floor during a task. In the following description, the load 100 will be described as an example of the object, but this is merely an example, and it is a matter of course that another object may be used.

The leg portion 2 has a balance function for preventing the humanoid robot 1 from falling in a case in which the upper body 2 tilts forward or backward with respect to the leg portion 3 or the humanoid robot 1 moves.

The joining portion 4 has a function of being able to change a distance between the upper body 2 and the leg portion 3 as illustrated in Fig. 1. Therefore, the position of the upper body 2 in an up-down direction with respect to the leg portion 3 can be adjusted as indicated by an arrow A to match the height of a task stand in the production line.

The driving of the humanoid robot 1 according to the present embodiment is controlled by a control system 10 mounted in the humanoid robot 1.

### (Structure of Gripping Portion 20)

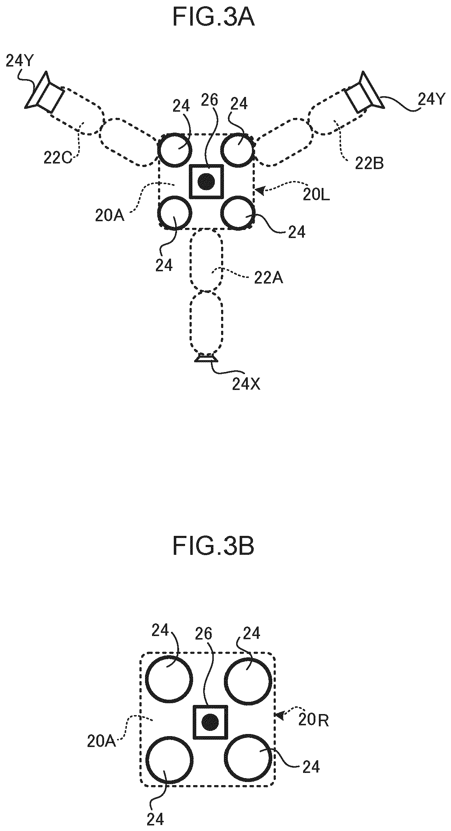

As illustrated in Fig. 3A, in the gripping portion 20 attached to the tips of the arm portions 5 and 6, one arm portion side (in the present embodiment, the arm portion 6 side which is the left arm) has a similar hand structure of a human (Intelligent Hand System), and the other arm portion side (in the present embodiment, the arm portion 5 side which is the right arm) has a rectangular structure. In a case in which the right and left gripping portions 20 are distinguished from each other, the left hand side is referred to as a "gripping portion 20L" below, and the right hand side is referred to as a "gripping portion 20R" below. The gripping portion 20 is rotatably attached to each of the arm portions 5 and 6.

### (Gripping portion 20L of Left Hand)

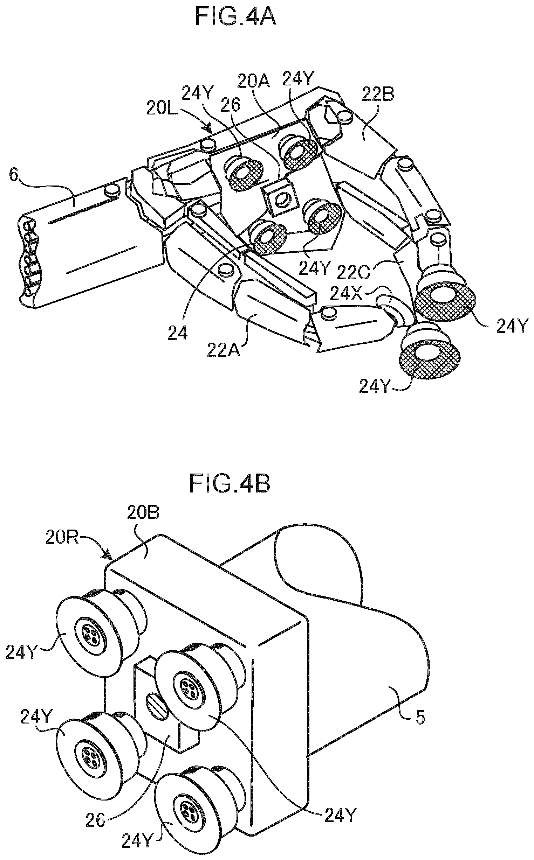

As illustrated in Figs. 3A and 4A, the gripping portion 20L according to the present embodiment includes three finger portions 22A, 22B, and 22C, and each finger portion includes a plurality of joints. In the present embodiment, the number of fingers of the gripping portion 20L is three, and the gripping portion 20L may have a multi-finger structure such as five fingers.

A plurality of (in the present embodiment, four) suctioning pads 24 are attached to a palm side 20A of the gripping portion 20L.

A palm sensor 26 is attached to a central portion of the palm side 20A of the gripping portion 20L in the present embodiment. The palm sensor 26 includes a high-resolution camera that identifies the type of the load 100 and a motion processing unit (MoPU) that specifies the position of the load 100.

Sucking pads 24X and 24Y are attached to the tip portions of the three finger portions 22A, 22B, and 22C, respectively. The classification of the suctioning pads 24X and 24Y will be described later.

### (Gripping portion 20R of Right Hand)

As illustrated in Figs. 3B and 4B, the gripping portion 20R according to the present embodiment includes a rectangular main body portion 20B, and a plurality of (in the present embodiment, four) suctioning pads 24 are attached to the tip surface of the main body portion 20B. The suctioning pad 24 may be either the suctioning pad 24X or the suctioning pad 24Y applied to the gripping portion 20L of the left hand, or may have another diameter dimension.

The palm sensor 26 is attached to a central portion of the tip surface of the main body portion 20B of the gripping portion 20R in the present embodiment. The palm sensor 26 includes a high-resolution camera that identifies the type of the load 100 and a motion processing unit (MoPU) that specifies the position of the load 100.

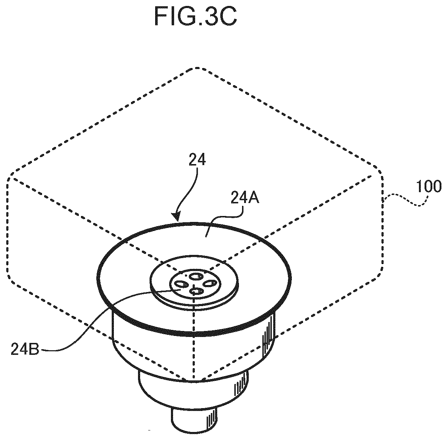

As illustrated in Fig. 3C, the suctioning pad 24 includes a rubber pad portion 24A that opposes a load 100 in a case in which the load 100 is gripped, and a nipple 24B that forms an air flow path for sucking air in a sealed space formed by close contact between the pad portion 24A and the load 100.

That is, the suctioning pad 24 in the present embodiment has an air suction structure, and has a suction force by sucking air in the sealed space from a hole 24C provided in the nipple 24B to make a vacuum (for example, including substantially vacuum). The suctioning pad 24 is not limited to the air suction structure, and may have a structure in which the volume of the sealed space is simply changed by deformation of the pad portion 24A, and sucking is performed.

Here, the size of the suctioning pad 24 varies depending on the attachment position (that is, there is a difference in the diameter dimension of the pad portion 24A depending on the attachment position).

In a case in which the suctioning pad is roughly classified, the suctioning pad 24 is classified into a large diameter size or a small diameter size, and includes the suctioning pad 24X having a relatively small diameter size (that is, the diameter is smaller than the large diameter size) and the suctioning pad 24Y having a relatively large diameter size (that is, the diameter is larger than the small diameter size). In a case in which there is no need to identify the size, the suctioning pad 24 may be simply referred to as a generic term.

The suctioning pad 24X having a small diameter size is attached to the finger portion 22A of the gripping portion 20L, and the suctioning pad 24Y having a large diameter size is attached to the other finger portions 22B and 22C and the palm side 20A.

The suctioning pad 24Y having a large diameter size is attached to the main body of the gripping portion 20R.

The sizes of the suctioning pads 24X and 24Y are two types, but may be three types or more.

The high-resolution camera constituting the palm sensor 26 in the present embodiment identifies what the captured load 100 is, whether the load 100 is a care product such as a shampoo, a conditioner, a cosmetic product, or a toothpaste, or a food product such as a cup noodle or a confectionery bag, based on captured image information.

In other words, the high-resolution camera has a role of acquiring information for specifying the type (for example, shape, size, or hardness) of the load 100.

The MoPU constituting the palm sensor 26 together with the high-resolution camera in the present embodiment outputs motion information indicating the captured motion (in this case, the relative motion between the arm portions 5 and 6) of the load 100 from an image of an object captured at a frame rate of 1000 frames/second or more, for example, at a frame rate of 1000 frames/second or more. The frame rate may be increased in a case in which the load 100 being moved is detected, and the frame rate may be decreased in a case in which a fixed object (for example, a load 100 that does not move) is detected.

The MoPU outputs, as the motion information, vector information of a motion along a predetermined coordinate axis of a point indicating the existence position of the object. That is, the motion information output from the MoPU does not include information necessary for identifying what the captured load 100 is (for example, the care product or food), and includes only information indicating the motion (for example, a moving direction and a moving speed) on coordinate axes (that is, the x axis, the y axis, and the z axis) of the center point (or the center point of gravity) of the load 100.

That is, it is possible to accurately guide the trajectory in a case in which the gripping portion 20 approaches the load 100.

Information output from the palm sensor 26 including the high-resolution camera and the MoPU is supplied to an information processing device 14.

The information processing device 14 can specify the position of the load 100 with high accuracy based on the information from the palm sensor 26 including the high-resolution camera and the MoPU, calculate the degree of spread of the finger portions 22A, 22B, and 22C at the time of gripping, the strength at the time of grasping, the suction force by the suctioning pad 24, and the like, accurately control minute motions of the arm portions 5 and 6 and the gripping portion 20, and handle picking tasks of various loads 100.

### (Selection of Sucking Pads 24X and 24Y in accordance with Property Including Shape, Weight, and like of Load 100)

In the present embodiment, the load 100 as a picking target can be classified as shown in Table 1 below.

In Table 1, loads 100 (Object) as the picking target are classified into three items of a shape, a weight, and other condition.

**[Table 1]**

| Object | | | |
|---|---|---|---|
| No. | Shape | Weight | Other condition |
| 1 | Box | Over 5kg | ***** |
| 2 | Not box | Over 5kg | ***** |
| 3 | Box | Below 5kg | Aligned |
| 4 | Box | Below 5kg | Not aligned |
| 5 | Other | ***** | ***** |
| **⋮** | ⋮ | ⋮ | ⋮ |

Box, Not box, and Other are set as the item of the shape. As the item of the weight, 5 kg or more (Over 5 kg) and less than 5 kg (Below 5 kg) are set. As the item of the condition, a linear shape (Aligned) mainly including a polygon such as a quadrangle and a non-linear shape (Not aligned) mainly including a sphere or a bag are set.

Here, in a comparative example, an applicable robot is selected based on the property of the load 100 determined by the combination of the above items, and a picking task is executed. That is, examples of the type of robot include a finger robot, a "large", a "medium", a "small" of a sucking robot, and a both 2 arms robot, and an applicable robot is selected from these robots.

However, in the selection of different types of robots, for example, in a case in which a robot waiting nearby is a robot of a type that is not an application target, it is necessary to call a robot of a new applicable type, and the efficiency of the picking task is poor.

Therefore, in the present embodiment, by providing a plurality of different gripping portions and attaching suctioning pads (for example, the suctioning pads 24X and 24Y) having different sizes to the single humanoid robot 1, one or two arm portions 5 and 6 attached to one humanoid robot 1 pick the load 100 having various properties described above.

More specifically, as shown in Table 2, the object size is classified into five patterns (Extra-Large, Large, Medium, Small, and Extra-small) in accordance with the property of the load 100 determined in Table 1, and the picking task corresponding to each of the five patterns is selected (Suitable for: Right hand, Left hand palm, Left 2 fingers, or left 1 finger).

**[Table 2]**

| Sucking Arm | | |
|---|---|---|
| Object size | Suitable for | |
| Extra-Large | Right hand | Use gripping portion 20R of right hand |
| Large | Left hand palm | Use suctioning pad 24Y attached to palm side 20A of gripping portion 20L |
| Medium | Left 2 fingers | Use two suctioning pads 24Y attached to finger portions 22B and 22X of gripping portion 20L |
| Small | Left 1 finger | Use finger portion 22B of gripping portion 20L |
| Extra-Small | Left 1 finger | Use finger portion 22A of gripping portion 20L |

More specifically, selection control as follows is executed.

(Selection Control 1) In the case of the load 100 having an extra-large size (extra-large size), it is determined that the load is the heaviest load 100, and the load 100 is picked by using the gripping portion 20R of the right hand.

(Selection Control 2) In the case of the load 100 having a large size (large size), the load 100 is picked by using the suctioning pad 24Y attached to the palm side 20A of the gripping portion 20L of the left hand (for example, four suctioning pads 24Y having a large diameter size are used).

(Selection Control 3) In the case of the load 100 having a medium size (medium size), the load 100 is picked by using the two suctioning pads 24Y attached to the finger portions 22B and 22C of the gripping portion 20L of the left hand (for example, two suctioning pads 24Y having a large diameter size are used).

(Selection Control 4) In the case of the load 100 having a small size (small size), the load 100 is picked by using the finger portion 22B of the gripping portion 20L of the left hand (for example, the suctioning pad 24Y having a large diameter size is used).

(Selection Control 5) In the case of the load 100 having an extra-small size (extra-small size), the load 100 is picked by using the finger portion 22A of the gripping portion 20L of the left hand (for example, the suctioning pad 24X having a small diameter size is used).

(Selection Control 6) Although not described in Table 2, in the case of the load 100 suitable for gripping (grasping), the load 100 is grasped and lifted up with the finger portions 22A, 22B, and 22C of the gripping portion 24L of the left hand. Selection Control 6 may be performed in combination with Selection Control 1 to Selection Control 5 described above, or may be performed alone.

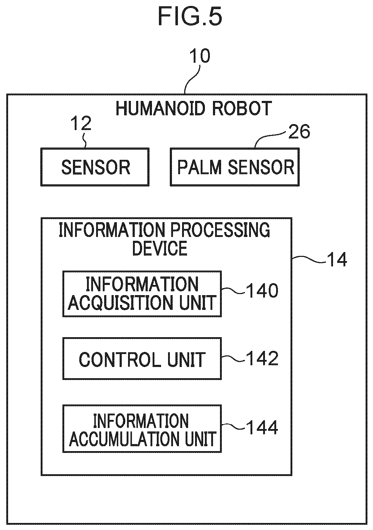

Fig. 5 is a schematic view illustrating an example of a control system for the humanoid robot according to the present embodiment. A control system 10 includes a sensor 12 mounted on the humanoid robot, the palm sensor 26 including the high-resolution camera and the MoPU, and the information processing device 14.

The sensor 12 sequentially acquires information representing at least a distance and an angle between an object around the humanoid robot 1 and the arm portions 5 and 6, the object on which the humanoid robot 1 performs a task. As the sensor 12, a highest-performance camera, a solid-state LiDAR, a multi-color laser coaxial displacement meter, or various other sensor groups can be adopted. Examples of the sensor 12 include a vibratory meter, a thermo camera, a hardness meter, a radar, a LiDAR, and a camera with high pixels, telephoto, an ultra-wide angle, 360 degrees, and high performance. Examples of the information obtained by the sensor 12 include vision recognition, fine sound, ultrasonic waves, vibration, infrared rays, ultraviolet rays, electromagnetic waves, temperature, humidity, spot AI weather forecast, high-precision multi-channel GPS, low-altitude satellite information, and long-tail incident AI data.

In addition to the above information, the sensor 12 detects an image, a distance, vibration, heat, odor, a color, sound, ultrasonic waves, ultraviolet rays, infrared rays, or the like. Examples of the information detected by the sensor 12 include the movement of the center of gravity of the humanoid robot 1, the material of the floor on which the humanoid robot 1 is installed, the outside air temperature, the outside air humidity, the vertical and lateral oblique inclination angle of the floor, and the moisture content.

The sensor 12 performs these detections, for example, every nanosecond.

The palm sensor 26 (for example, a high-resolution camera and a MoPU) is a sensor provided in the gripping portions 20 of the arm portions 5 and 6, and has a camera function of capturing an image of the load 100 and a position specifying function of specifying the position of the load 100 separately from the sensor 12.

In a case of using one MoPU, it is possible to acquire vector information of a motion of a point indicating the existence position of the object along each of two coordinate axes (that is, the x axis and the y axis) in a three-dimensional orthogonal coordinate system. Using the principle of a stereo camera, two MoPUs may be used to output vector information of a motion of a point indicating the existence position of an object along each of three coordinate axes (that is, the x axis, the y axis, and the z axis) in the three-dimensional orthogonal coordinate system. The z axis is an axis along a depth method (for example, traveling of a vehicle).

The information processing device 14 includes an information acquisition unit 140, a control unit 142, and an information accumulation unit 144.

The information acquisition unit 140 acquires information of an object detected by the sensor 12 and the palm sensor 26 (for example, a high-resolution camera and a MoPU).

The control unit 142 controls a rotating operation of the joining portion 4, a moving operation in the up-down direction, operations of the arm portions 5 and 6, and the like by using the information acquired by the information acquisition unit 140 from the sensor 12 and artificial intelligence (AI).

The control unit 142 ascertains the type (for example, the shape, the size, or the hardness) and position of the load 100 in detail by using the information acquired by the information acquisition unit 140 from the palm sensor 26 (for example, a high-resolution camera and a MoPU), and performs control such that the palm side 20A opposes the load, the load is adsorbed by the suctioning pad 24, and is grasped by the three finger portions 22A, 22B, and 22C in accordance with the outer shape and position (also simply referred to as "gripping control" below). The gripping control (for example, only "suction", only "grasping", or a combination of "suction" and "grasping") may be selected by ascertaining the type of the object based on the outer shape information of the load 100.

For example, the control unit 142 executes the following processes as the whole operation.
(1) The joining portion 4 is driven so that an object on the shelf and the floor can be picked up, and the upper body 2 is tilted forward or backward.
(2) The arm portions 5 and 6 and the gripping portion are driven to be able to grip the object.
(3) The upper body 2 is driven up and down with respect to the leg portion 3 to match the height of the task stand of the production line.
(4) In order to prevent the humanoid robot 1 from falling, balance is taken.
(5) Driving of wheels 7 and 8 is controlled such that the humanoid robot 1 can push a cart or the like.

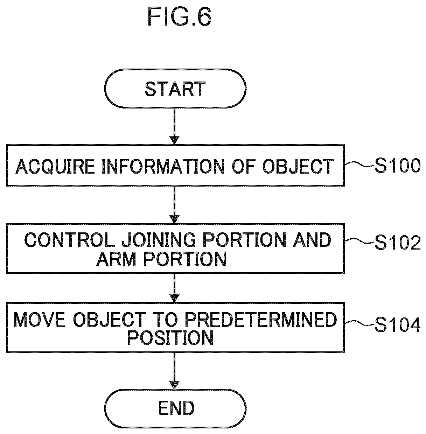

For example, in a case of picking up an object on the floor, the information processing device 14 repeatedly executes the flowchart illustrated in Fig. 6.

In Step S100, the information acquisition unit 140 acquires information of an object detected by the sensor 12.

In Step S102, the control unit 142 picks up the object on the floor by controlling the joining portion 4 and the arm portions 5 and 6 by using the AI and the information of the object acquired in Step S100.

In Step S104, the control unit 142 moves the picked-up object to a predetermined position.

According to the present embodiment, the humanoid robot 1 includes the upper body 2, the leg portion 3, and the joining portion 4 that rotatably joins the upper body 2 and the leg portion 3. The rotation of the joining portion 4 is controlled based on the information acquired by the sensor 12. Therefore, a distance and an angle between the humanoid robot 1 and the object can be determined, so that the operation of picking up the object on the floor can be performed.

Since the joining portion 4 can change the distance between the upper body 2 and the leg portion 3, the position of the upper body 2 in the up-down direction with respect to the leg portion 3 can be adjusted to match the height of the task stand in the production line.

The leg portion 2 has a balance function for preventing the humanoid robot 1 from falling in a case in which the upper body 2 tilts forward or backward with respect to the leg portion 3. Therefore, it is possible to prevent the humanoid robot 1 from falling in a case in which a task of pushing or pulling an object in the production line is performed. Thus, it is possible to prevent a failure of the humanoid robot 1 due to falling, or an injury of a person around the humanoid robot 1.

### (Gripping Control of Load 100)

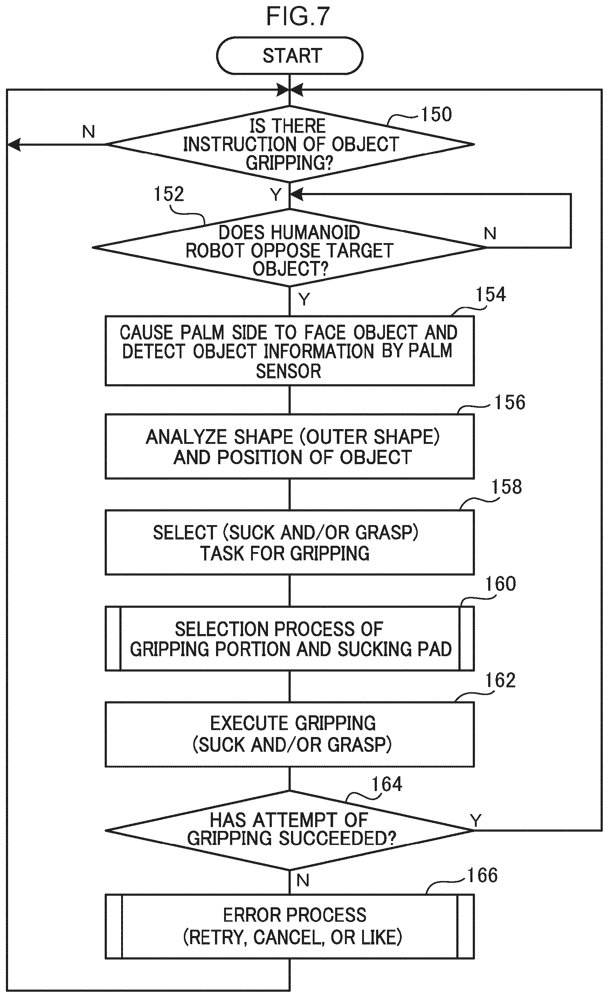

Fig. 7 is a flowchart illustrating a procedure of gripping control in a case in which an object is gripped by the gripping portion 20, in conjunction with the whole operation of the humanoid robot 1.

In Step 150, it is determined whether or not an instruction to grip an object is issued. In a case in which the determination is affirmative, the process proceeds to Step 152, the humanoid robot 1 is moved (for example, the arm portions 5 and 6 are operated), the palm side 20A is caused to oppose the load 100 as the target, and the process proceeds to Step 154.

In Step 154, information of the load 100 is detected with causing the palm side 20A to face the load.

In next Step 156, detection information by the palm sensor 26 (for example, a high-resolution camera and a MoPU) is analyzed to ascertain the type (for example, the shape, the size, or the hardness) and position of the load 100 in detail, and the process proceeds to Step 158.

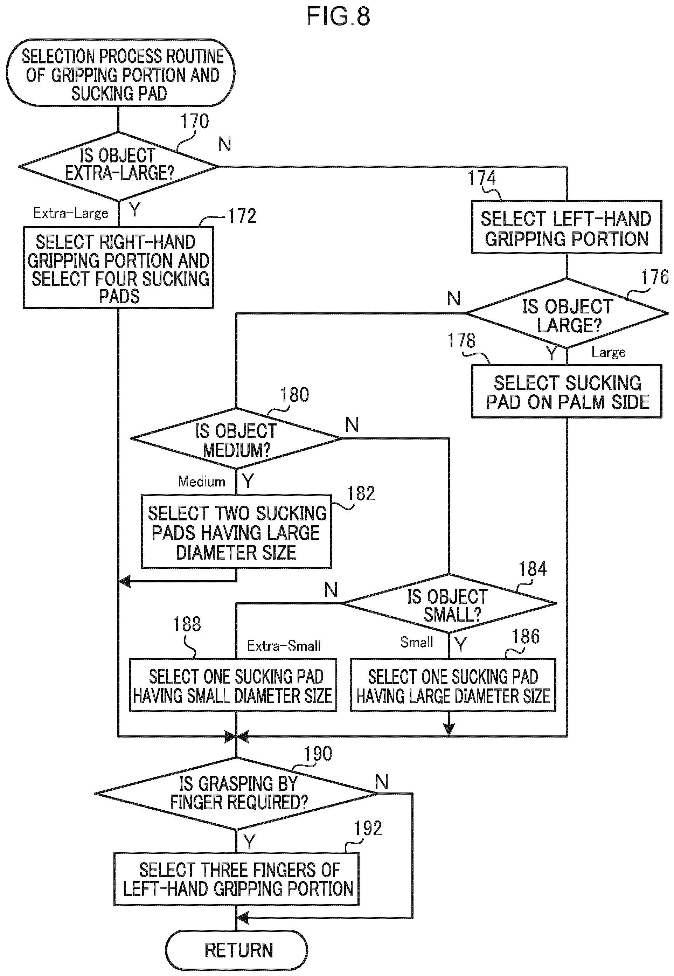

In Step 158, a task for gripping the load 100 is selected. For example, selection is performed from only "suction", only "grasping", a combination of "suction" and "grasping", and the like,. Then, the process proceeds to Step 160 to execute a selection process of the gripping portion 20 and the suctioning pad 24 (for details, see Fig. 8) in accordance with the property of the load 100, and the process proceeds to Step 162.

In Step 162, gripping (for example, only "suction", only "grasping", or "suction" and "grasping") of the load 100 is executed.

In next Step 164, it is determined whether or not an attempt to grip the load 100 has succeeded. In a case in which the determination is affirmative, the gripped load 100 is carried to a predetermined place. Then, the process proceeds to Step 150 and the robot waits for an instruction to grip the next object.

In addition, in a case in which the determination is negative in Step 164, the process proceeds to Step 166, an error process (for example, retry or cancellation) is executed, and the process returns to Step 150.

### (Selection Process of Gripping Portion and Sucking Pad)

Fig. 8 is a control flowchart illustrating a selection process routine of the gripping portion and the suctioning pad, which is executed in Step 160 in Fig. 7.

In Step 170, it is determined whether or not the load 100 has an extra-large size. In a case in which the determination is affirmative (that is, extra-large size is determined) in Step 170, the process proceeds to Step 172. The gripping portion 20R on the right hand side is selected, and the four suctioning pads 24Y attached to the gripping portion 20R are selected, and the process proceeds to Step 190.

In a case in which the determination is negative in Step 170, the process proceeds to Step 174. The gripping portion 20L on the left hand side is selected, and the process proceeds to Step 176.

In Step 176, it is determined whether or not the load 100 has a large size. In a case in which the determination is affirmative (that is, the large size is determined) in Step 176, the process proceeds to Step 178. The four suctioning pads 24Y on the palm side 20A of the gripping portion 20L are selected, and the process proceeds to Step 190.

In a case in which the determination is negative in Step 176, the process proceeds to Step 180.

In Step 180, it is determined whether or not the load 100 has a medium size. In a case in which the determination is affirmative (that is, the medium size is determined) in Step 180, the process proceeds to Step 182. The two suctioning pads 24Y that have a large diameter size and are attached to the finger portions 22B and 22C of the gripping portion 20L are selected, and the process proceeds to Step 190.

In a case in which the determination is negative in Step 180, the process proceeds to Step 184.

In Step 184, it is determined whether or not the load 100 has a small size. In a case in which the determination is affirmative (that is, the small size is determined) in Step 184, the process proceeds to Step 186. The one suctioning pad 24Y that has a large diameter size and is attached to the finger portion 22B or 22C of the gripping portion 20L is selected, and the process proceeds to Step 190.

In a case in which the determination is negative (that is, the extra-small size is determined) in Step 184, the process proceeds to Step 188. The suctioning pad 24X that has a small diameter size and is attached to the finger portion 22A of the gripping portion 20L is selected, and the process proceeds to Step 190.

In Step 190, it is determined whether or not it is necessary to perform grasping by the finger portions 22A, 22B, and 22C. In a case in which the determination is affirmative, the process proceeds to Step 192, and the grasping operation by the three finger portions 22A, 22B, and 22C of the gripping portion 24L on the left hand side is selected. Then, this routine ends. In a case in which the determination is negative in Step 190, this routine ends.

As described above, according to the present embodiment, the three finger portions 22A, 22B, and 22C are provided in the gripping portion 20, the plurality of suctioning pads 24 are attached to the palm side 20A and the finger portions 22A, 22B, and 22C of the gripping portion 20, and the suctioning pad 24 suctions the load 100 with the air suction structure, for example, and the finger portions 22A, 22B, and 22C are bent. In this manner, the load 100 can be grasped.

In addition, the classification is performed based on the property (for example, the shape or the weight) of the load 100, and the selection of the gripping portion 20 and the selection of the suctioning pad 24 are performed based on the classified result, whereby various types of loads 100 can be picked by the single humanoid robot 1. In other words, it is not necessary to select and dispatch different robots for each property of the object, and it is possible to improve the efficiency of the picking task.

By attaching the palm sensor 26 including the high-resolution camera and the MoPU to the palm side 20A and mounting the gripping portion 20 having the above structure on the arm portions 5 and 6 of the humanoid robot 1, it is possible to reliably hold the object by the suction surface, and even in a case in which the motion of the humanoid robot 1 is early, it is possible to carry the load 100 without dropping from the gripping portion 20.

Since the palm sensor 26 (for example, the high-resolution camera and the MoPU) is mounted on the palm side 20A, it is possible to capture the load 100 with high accuracy, and also handle a task that makes minute motions.

Furthermore, it is possible to grasp a very soft and fragile object by the motions of the finger portions 22A, 22B, and 22C without using the suctioning pad 24, and to prevent the damage and the like of the soft load 100 by adjusting the grasping force.

### (Second Embodiment)

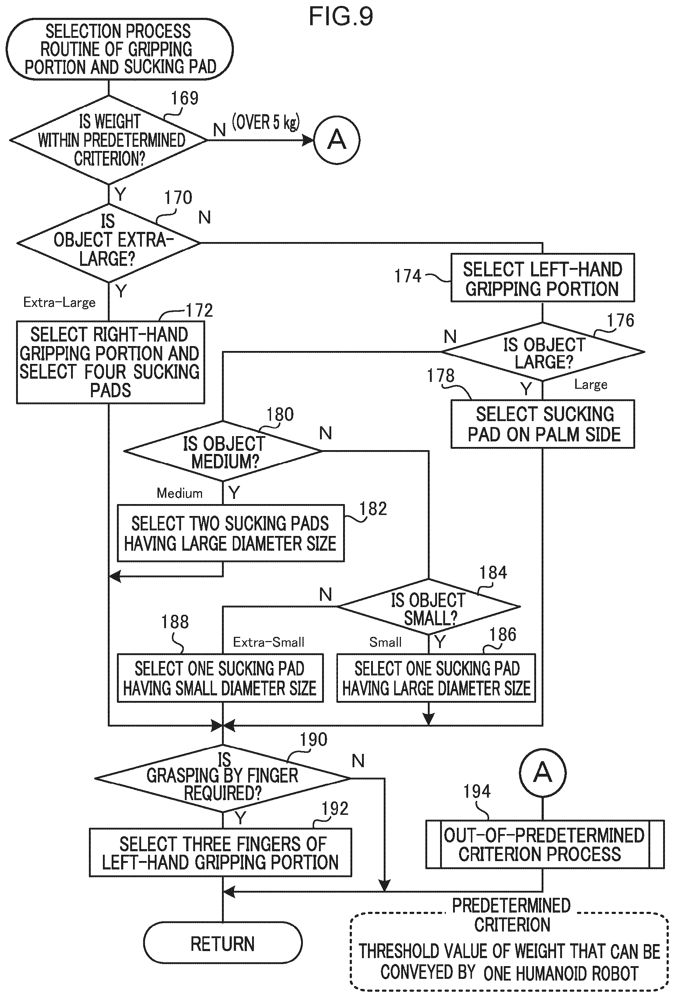

A second embodiment of the disclosure will be described with reference to Figs. 9 to 12.

In the second embodiment, the same components as those in the first embodiment are denoted by the same reference signs, and description thereof is omitted.

A feature of the second embodiment is that a plurality of humanoid robots 1 grip and convey one load 100 in cooperation with one another.

In the first embodiment, the selection of the gripping portion 20 (for example, left hand or right hand) and the selection of the size of the suctioning pad 24 are performed in accordance with the state (here, the weight) of the load 100, and the load 100 is gripped in an optimum state.

However, in a case in which the weight of the load 100 exceeds a predetermined criterion (10 kg or more in the second embodiment), gripping by one humanoid robot 1 becomes unstable.

Therefore, a configuration in which, in a case in which a load 100 exceeding the predetermined criterion is gripped, a plurality of humanoid robots 1 cooperatively grip and convey the load 100 is made.

In this case, in a case in which the load 100 is gripped, and the load 100 exceeds the predetermined criterion based on the weight (alternatively, weight measured at the site) measured in advance, the required number of humanoid robots 1 is set based on the weight (see Table 3).

**[Table 3]**

| Weight W of load | Required number of humanoid robots |
|---|---|
| 10 kg < W ≤ 15 kg | Two |
| 15 kg < W ≤ 20 kg | Three |
| 20 kg < W ≤ 25 kg | Four |
| 25 kg < W | Special conveyance robot |

As a result, a plurality of humanoid robots 1 can be collected with respect to the load 100 as a gripping target, and each of the plurality of humanoid robots 1 can be caused to execute the gripping operation.

In this case, the load at the position gripped by each humanoid robot 1 is not averaged depending on the barycentric position of the load 100 in some cases, and thus, it is preferable to calculate a load sharing ratio at each gripping point.

Since the load at the gripping point is recognized, the gripping form (for example, the sizes of the left hand/right hand and the suctioning pad 24, and whether or not the grasping operation is used in combination) based on the weight or the like executed based on Table 2 in the first embodiment.

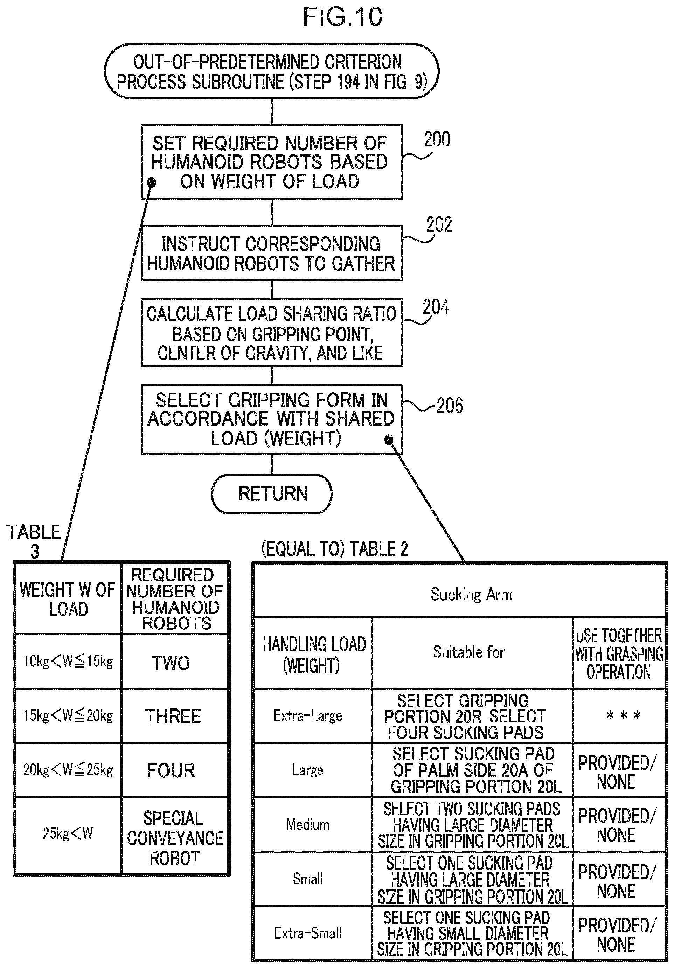

The operation of the second embodiment will be described below with reference to the flowcharts of Figs. 9 and 10. The processing based on each flowchart is executed in the information processing device 14 of one humanoid robot 1 that tries to grip the load first.

As illustrated in Fig. 9, in Step 169, it is determined whether or not the weight of the load 100 as a target to be gripped is within a predetermined criterion based on the prior information.

In a case in which the determination is affirmative in Step 169, the process proceeds to Step 170. The process subsequent to Step 170 is the same as that in Fig. 8 described in the first embodiment, and thus the description thereof will be omitted here.

In addition, in a case in which the determination is negative in Step 169, it is determined that the weight of the load 100 is out of the predetermined criterion (for example, over 5 kg), the process proceeds to Step 194. An out-of-predetermined criterion process (see Fig. 10, details will be described later) is executed, and this routine ends.

In the flowchart of Fig. 9, the determination in Step 169 is made based on the weight information that can be known in advance. However, in a case in which there is no weight information as the prior information, the weight may be measured by using the gripping portion 20R of the right hand corresponding to Extra-Large selected in Step 172, and in a case in which the weight is out of the predetermined criterion (for example, over 5 kg), the process may proceed to Step 194.

### (Details of Out-of- Predetermined Criterion Process)

Fig. 10 is a control flowchart illustrating details of an out-of-predetermined criterion process subroutine in Step 194 in Fig. 9.

In Step 200, the required number of humanoid robots 1 is set based on the weight of the load.

That is, as shown in Table 3, the required humanoid robot 1 is determined in accordance with the weight of the load 100. In a case in which the weight of the load 100 is 25 kg, the weight exceeds the allowance of the gripping operation of the humanoid robot 1. Thus, the conveyance is left to a special conveyance robot.

The range setting of the weight of the load 100 in Table 3 is an example, and may be determined based on the specification of the humanoid robot 1.

In next Step 202, the humanoid robot 1 is instructed to gather. An instruction target is mainly the humanoid robot 1 on standby, for example, but the humanoid robot 1 returning to the standby position may be instructed near the load 100 as the gripping target. In a case in which conditions are satisfied, the humanoid robot 1 that is gripping and conveying other load 100 may be used. Examples of the condition include a case in which the gripping portion necessary for gripping the load 100 this time is not used and a conveyance destination is close to the load 100 that is being currently gripped. The condition can be executed in a case in which a plurality of humanoid robots 1 are collectively managed.

In next Step 204, the load sharing ratio of the load 100 is calculated based on the gripping point of each of the plurality of collected humanoid robots 1, the center of gravity of the load 100, and the like. Then, in Step 206, the gripping form is selected in accordance with the calculation result (for example, the shared load (that is, the weight)) in Step 204. Table 2 in the first embodiment can be used to select the gripping form. In other words, processes similar to Steps 170 to 192 in Fig. 8 are executed in Step 206.

### (Modification Example of Second Embodiment)

In the second embodiment, in a case in which a plurality of (here, two) humanoid robots 1 grip and convey one load 100, the load 100 is hardly dropped because conveyance is possible on a linear path in the same direction at a constant speed.

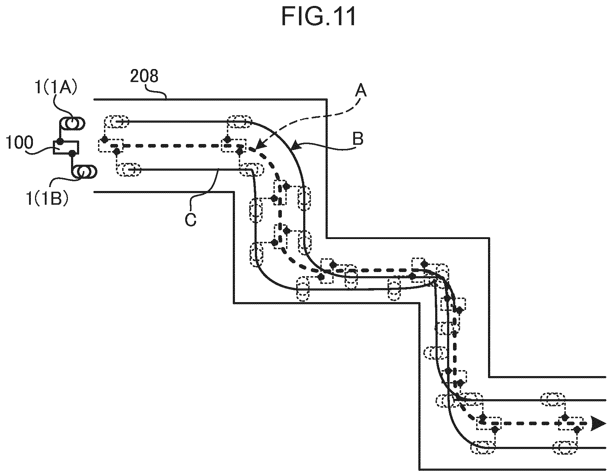

However, for example, in a case in which a conveyance path is the crank-shaped conveyance path 208 in which the right turn and the left turn exist as illustrated in Fig. 11, the shapes of the traveling trajectories of two humanoid robots 1 are different from each other.

With deceleration and acceleration at the time of the right turn and the left turn, an inertial force may be applied to the load 100, and the gripping state is changed, resulting in detachment of the load 100.

Therefore, in the modification example of the second embodiment, stable conveyance is realized in the conveyance path including the right turn and the left turn.

Fig. 11 is a plan view illustrating a state in which two humanoid robots 1 gripping one load 100 are about to reach a crank-shaped conveyance path.

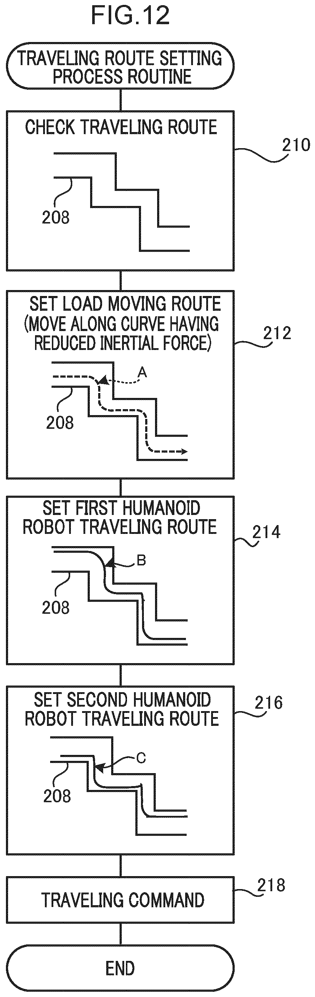

In the situation as illustrated in Fig. 11, the information processing devices 14 (see Fig. 5) of two humanoid robots 1 cooperate with each other to execute a traveling route setting process illustrated in Fig. 12.

That is, in Step 210 of Fig. 12, the traveling route is checked, and then the process proceeds to Step 212. The stable conveyance (for example, curve movement in which the inertial force applied to the load 100 can be most reduced) of the load 100 in the checked traveling route is set (see a dotted arrow A in Fig. 11).

In next Step 214, the traveling route (see a solid arrow B in Fig. 11) of one (for example, a first humanoid robot 1A) of two humanoid robots 1 (for example, the first humanoid robot 1A and a second humanoid robot 1B) is set.

Here, the relative positional relationship between the two humanoid robots 1 (for example, the first humanoid robot 1A and the second humanoid robot 1B) and the position (that is, three points indicating positions of the two humanoid robots 1 and the load 100 in plan view) of the load 100 is unchanged.

Therefore, in next Step 216, the traveling route of the other (for example, the second humanoid robot 1B) of the two humanoid robots 1 (for example, the first humanoid robot 1A and the second humanoid robot 1B) is set based on the movement route of the load 100 and the traveling route of the first humanoid robot 1A (see a solid arrow C in Fig. 11).

In Step 218, traveling is commanded based on the traveling routes set in Steps 214 and 216, and this routine ends.

In the above description, the configuration in which the humanoid robot 1 selected first conveys the load 100 from a starting point (for example, a gripping position) to an ending point (for example, a destination) has been described. Alternatively, at a predetermined relay point, the load 100 may be conveyed from the starting point to the ending point by a so-called relay method while being delivered to another humanoid robot 1.

As the delivery condition, the relay point may be determined in advance for each predetermined distance, or a place having a step may be used as the relay point.

Depending on the state of the path (for example, straight/curve, road width, and road surface state), the load 100 may be delivered to the humanoid robot 1 advantageous for the conveyance of the load 100 under the state of the path.

As an example, the humanoid robot 1 in which the speed is emphasized is selected in straight traveling, the humanoid robot 1 provided with a damper mechanism that can incline to the left and right is selected in curve traveling based on the curvature radius of the curve and the traveling speed, and the humanoid robot 1 provided with a shock absorber having a high impact absorption force is selected in road traveling with many unevenness, so that the load 100 can be conveyed in the stable gripping state by cooperating with the humanoid robot 1 at the appropriate position.

In the second embodiment (including the modification example), the cooperative operation control of the plurality of humanoid robots 1 is performed in the information processing device 14 (see Fig. 5) of one humanoid robot 1 that tries to grip the load first. Alternatively, the cooperative operation control of the plurality of humanoid robots 1 can be performed by information processing devices 14 of humanoid robots 1 cooperating with each other to exchange the position information and the like. In this case, a configuration in which the main information processing device 14 may be set (a so-called leader humanoid robot 1 is set) to command a sub-information processing device 14 may be made, or a plurality of humanoid robots 1 coupled to each other may be operated in accordance with an instruction from a management control center (not illustrated) that collectively manages the plurality of humanoid robots 1.

### (Third Embodiment)

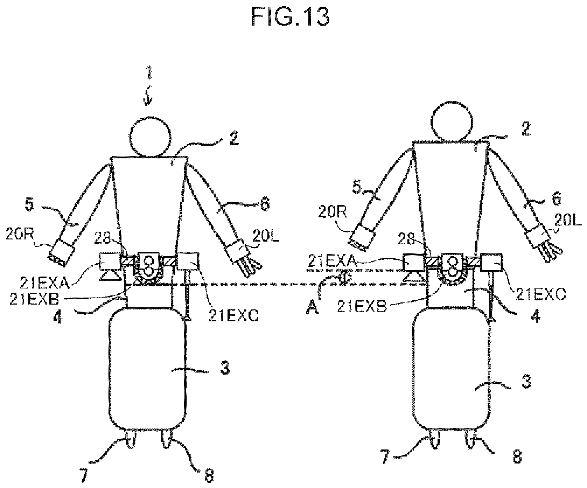

A third embodiment of the disclosure will be described with reference to Figs. 13 to 15.

In the third embodiment, the same components as those in the first embodiment may be denoted by the same reference signs, and description thereof may be omitted.

### (Selection of Sucking Pads 24X and 24Y)

In the present embodiment, as in the first embodiment, the suctioning pads 24X and 24Y are selected based on an attribute (also referred to as properties) including the shape, the weight, and the like of the load 100. Specifically, with Selection Control 1 to 6, selection of the gripping portion 20 (for example, left hand or right hand) and selection of the size of the suctioning pad 24 are performed in accordance with the attribute state (here, the weight) of the load 100, and thus the load 100 is gripped in the optimum state. In the following description, the gripping portion 20 is referred to as a "standard gripping portion 20" for convenience of description.

Here, in a case in which the attribute of the load 100 is a predetermined criterion (for example, a load having a predetermined size or more, a load having a predetermined weight or more, a load that is soft and easily deformed, and a load in a flat surface only on the bottom surface of a recessed portion), gripping by the standard gripping portion 20 (20L and 20R) mounted on the arm portions 5 and 6 in advance becomes unstable.

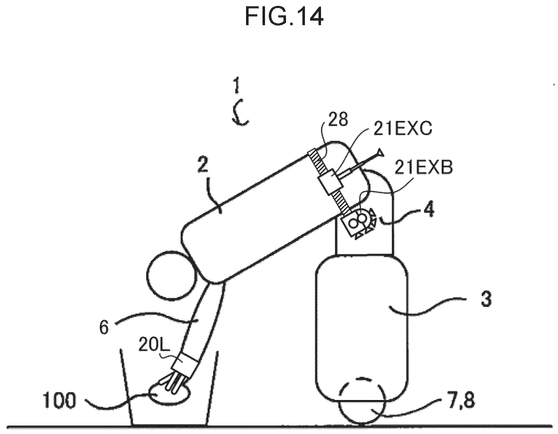

Therefore, in the case of gripping the load 100 exceeding the predetermined criterion, as illustrated in Figs. 13 and 14, an extra gripping portion 21EX (20EXA, 20EXB, and 20EXC) is provided, and the standard gripping portion 20 is configured to be replaced with the extra gripping portion 21EX if necessary to grip and convey the load 100.

As illustrated in Figs. 13 and 14, the standard gripping portion 20 attached to the tips of the arm portions 5 and 6 has a structure in which one side (in the present embodiment, the arm portion 6 side which is the left arm) has a hand structure similar to that of a human (Intelligent Hand System) and the other side (in the present embodiment, the arm portion 5 side which is the right arm) has a rectangular structure. In a case in which the right and left standard gripping portions 20 are distinguished from each other, the left hand side is referred to as a "standard gripping portion 20L" below, and the right hand side is referred to as a "standard gripping portion 20R") below. The standard gripping portion 20 is rotatably attached to each of the arm portions 5 and 6.

In the humanoid robot 1, a belt 28 is mounted on a lower part (so-called waist position) of the upper body 2, and a holder (not illustrated) that detachably holds each of three extra gripping portions 21EXA, 20EXB, and 20EXC is attached to the belt 28.

In Fig. 13, the number of the extra gripping portions 21EX is three. The number of the extra gripping portions 21EX may be one type, two types, or four or more types, and the number of the extra gripping portions to be mounted may be determined in accordance with the attribute of the load 100 which will be described later.

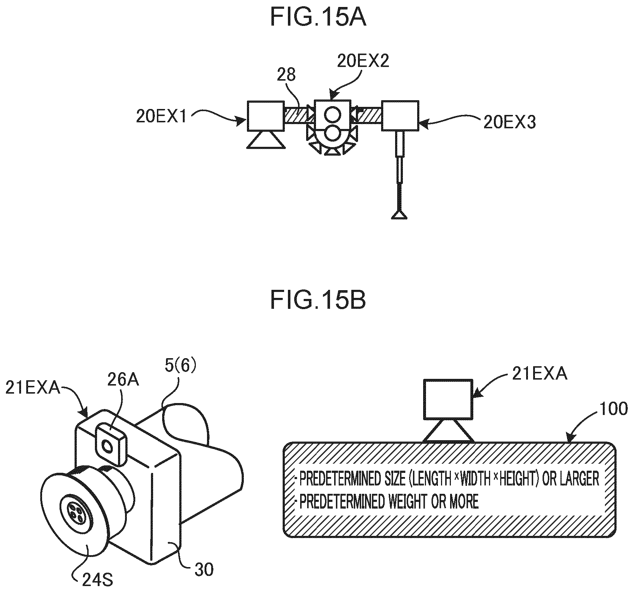

Figs. 15A to 15D illustrate relationships between detailed configurations of three types of extra gripping portions 21 (21EXA, 21EXB, and 21EX) provided in the humanoid robot 1 according to the present embodiment separately from the standard gripping portion 20, and applications of the three types of extra gripping portions.

Fig. 15A is a front view of the belt 28 attached to the humanoid robot 1 in Fig. 13.

The extra gripping portion 21EXA, the extra gripping portion 21EXB, and the extra gripping portion 21EX are detachably attached in order from the left side in Fig. 15A.

As illustrated in Fig. 15B, in the extra gripping portion 21EXA, a single pad 24S is attached to a rectangular main body portion 30. The diameter dimension of the suction surface of the pad 24S is larger than that of the suctioning pad 24 attached to the standard gripping portion 20 (that is, an extra-large size), and is applied to a case of gripping a load 100 of a predetermined size (that is, length × width × height) or more and a load 100 of a predetermined weight or more. In other words, the load 100 that cannot be classified in Table 1 (that is, the load is out of the criterion) and has been conventionally left to a human is gripped as a target.

The pad 24S is not limited to the specification of suction, and for example, although not illustrated, may have a configuration in which a suction assisting member such as a hook or an adhesive is formed on a surface opposing the load 100, and the load 100 is gripped by the suction assisting member (for example, the load is hooked on a hook or adhered to an adhesive).

A monitoring sensor 26A having a function equivalent to that of the palm sensor 26 is attached to the main body portion 30.

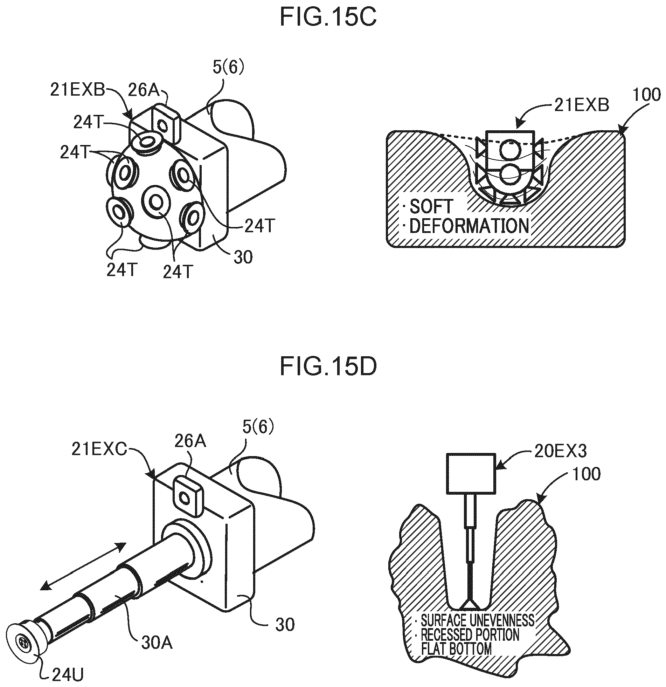

As illustrated in Fig. 15C, in the extra gripping portion 21EXB, a hemispherical adapter 30A is attached to the rectangular main body portion 30.

A plurality of suctioning pads 24T are attached to the adapter 30A such that axial directions thereof are radially dispersed.

The suctioning pad 24T has a diameter dimension equivalent to the diameter dimensions of the suctioning pads 24, 24X, and 24Y attached to the standard gripping portion 20, and is applied to a case of gripping a soft load 100 and a deformable load 100. In other words, the load 100 in which, even though gripping is attempted, the surface is made of a soft material and is recessed in a case in which the arm portions 5 and 6 are pressed, and which cannot be sucked by the suctioning pad 24 (that is, the load is out of the criterion), and has been conventionally left to a human is set as the target and gripped.

The monitoring sensor 26A having a function equivalent to that of the palm sensor 26 is attached to the main body portion 30.

As illustrated in Fig. 15D, in the extra gripping portion 21EXC, an extendable adapter 30B is attached to the rectangular main body portion 30.

The adapter 30B is formed by a plurality of cylindrical members, and has a diameter dimension that gradually decreases from the base portion side to the tip portion side, so that the cylindrical member on the tip portion side can be accommodated in the cylindrical member on the base portion side. Therefore, the adapter 30B can extend and contract in a state in which the cylindrical member is accommodated.

A suctioning pad 24U is attached to the tip of the first cylindrical member.

The suctioning pad 24U has a diameter dimension equivalent to the diameter dimensions of the suctioning pads 24, 24X, and 24Y attached to the standard gripping portion 20, and is applied to a case of gripping a load 100 having an uneven surface and a load 100 having a flat surface on the bottom surface of the recessed portion. In other words, the suctioning pads 24, 24X, and 24Y attached to the standard gripping portion 20 uses, as a target, the load 100 that does not reach a grippable plane (that is, the load is out of the criterion) and has been conventionally left to a human, and the load is gripped.

The monitoring sensor 26A having a function equivalent to that of the palm sensor 26 is attached to the main body portion 30.

Here, in a case in which gripping by the suctioning pads 24, 24X, and 24Y attached to the standard gripping portion 20 is difficult, the optimum extra gripping portion 21 is selected based on the attribute of the load (see Table 4) in gripping the load 100, and the gripping operation is executed by replacing the standard gripping portion 20 with the selected extra gripping portion 21. That is, an operation of detaching the standard gripping portion 20 from one arm portion and an operation of mounting the extra gripping portion 21 on one arm portion are executed by using the standard gripping portion 20 mounted on the other arm portion. Replacement from the extra gripping portion 21 to the standard gripping portion 20 may be performed. The replacement may be performed by the extra gripping portion 21 mounted on the other arm portion. That is, the attachment and detachment operation of the standard gripping portion 20 or the extra gripping portion 21 to and from one arm portion is executed by using the standard gripping portion 20 or the extra gripping portion 21 mounted on the other arm portion.

**[Table 4]**

| Attribute of load | Extra gripping portion type | Characteristics |
|---|---|---|
| · Predetermined size or larger | Extra gripping portion 21EXA | Extra-large suctioning pad + suction assisting member |
| · Predetermined weight or more | | |
| · Soft | Extra gripping portion 21EXB | Deformation support hemispherical base |
| · Deformation | | |
| · Surface unevenness | Extra gripping portion 21EXC3 | Extending and contracting extension |
| . Recessed portion flat bottom | | |
| ⋮ | ⋮ | ⋮ |

### (Selection Process of Gripping Portion and Sucking Pad)

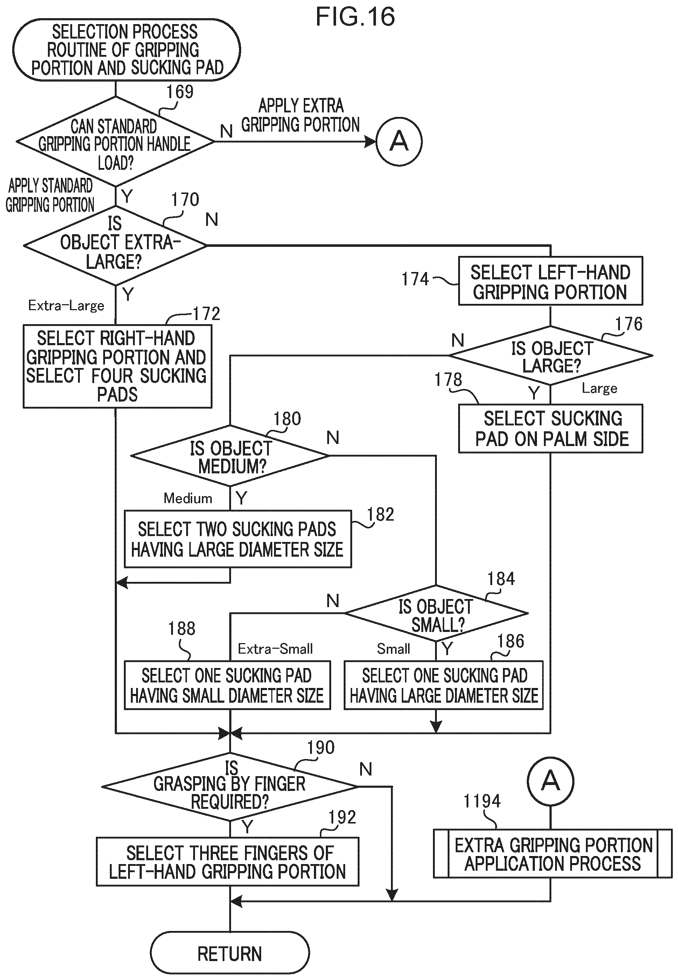

Fig. 16 is a control flowchart illustrating the selection process routine of the gripping portion and the suctioning pad, which is executed in Step 160 in Fig. 7.

As illustrated in Fig. 16, in Step 169, it is determined whether or not the form can be performed by the standard gripping portion 20 based on the prior information. In a case in which the determination is affirmative in Step 169, the process proceeds to Step 170. The process subsequent to Step 170 is the same as that in Fig. 8 described in the first embodiment, and thus the description thereof will be omitted here.

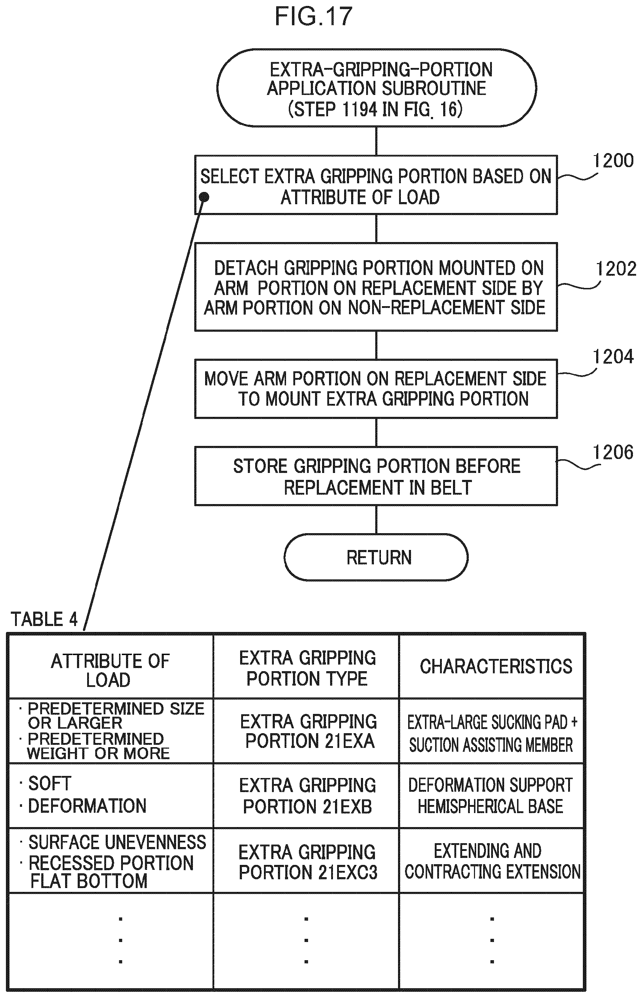

In a case in which the determination is negative in Step 169, it is determined that the extra gripping portion 21 needs to be applied, and the process proceeds to Step 1194. An extra-gripping-portion application process (see Fig. 17, details will be described later) is executed, and this routine ends.

In the flowchart of Fig. 16, the determination in Step 169 is made with the weight information that can be known in advance. However, in a case in which there is no application availability information of the standard gripping portion 20 as the prior information, the attribute information of the load 100 may be acquired by using the palm sensor 26 of the standard gripping portion 20R of the right hand corresponding to extra-large selected in Step 172, and in a case in which the attribute information cannot be applied to the standard gripping portion, the process may proceed to Step 1194.

### (Details of Extra-gripping-portion Application Process)

Fig. 17 is a control flowchart illustrating details of an extra-gripping-portion application process subroutine in Step 1194 in Fig. 16.

In Step 1200, the extra gripping portion 21 is selected based on the attribute of the load 100 (see Table 4).

That is, as shown in Table 4, the type of the extra gripping portion 21 required is determined in accordance with the attribute of the load 100.

The selection of the type of the extra gripping portion based on the attribute of the load 100 illustrated in Table 4 is an example, and may be determined based on the type and the number of possessed extra gripping portions.

In the present embodiment, since the three types of extra gripping portions 21 are mounted on the belt 28, selection is performed from the three types of extra gripping portions 21. The number of the extra gripping portions to be mounted on the belt 28 may be increased, or the extra gripping portions may be selected from various types of extra gripping portions 21 and mounted on the belt 28 in advance in accordance with the task site. Different types of extra gripping portions 21 may be mounted on the humanoid robot 1.

In next Step 1202, the gripping portion (for example, the standard gripping portion 20 is usually used, but another extra gripping portion 21 may be already mounted) mounted on the arm portion 6 (or 5) on a replacement side is detached by the arm portion 5 (or 6) on a non-replacement side.

In next Step 1204, the arm portion 6 (or 5) on the replacement side is moved to the position of the belt 28, and the extra gripping portion 21 is mounted. The same operation is performed in a case of returning to the standard gripping portion 20.

In next Step 1206, the gripping portion that is originally mounted on the arm portion 6 (or 5) on the replacement side, which is gripped by the arm portion 5 (or 6) on the non-replacement side is stored in the holder of the belt 28, and this routine ends.

As described above, in the present embodiment, in addition to the gripping operation control by the standard gripping portion 20, for example, the extra gripping portion 21 is prepared specifically for a special load 100 such as a load 100 having a weight exceeding a criterion, a load 100 whose surface is softly pressed and is recessed, and a load 100 having unevenness on the surface and having a flat surface capable of being sucked only on a part (recessed bottom surface), so that it is possible to grip and convey a load 100 out of a criterion, which has been conventionally left to a human hand by applying the humanoid robot 1.

### (Fourth Embodiment)

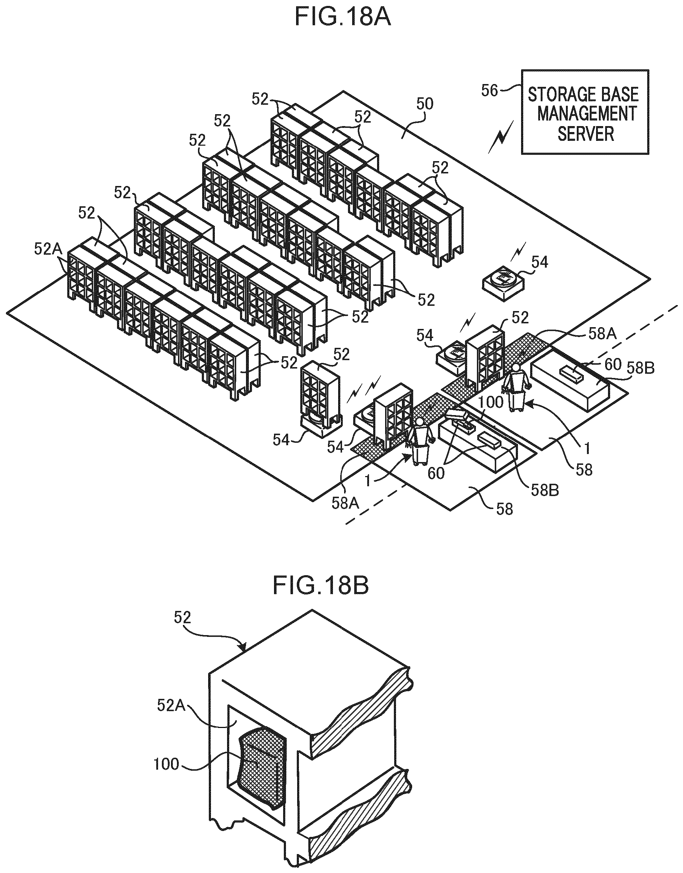

A fourth embodiment of the disclosure will be described with reference to Figs. 18 to 20.

In the fourth embodiment, the same components as those in the first embodiment may be denoted by the same reference signs, and description thereof may be omitted.

### (Configuration of Distribution Center)

Fig. 18A is a perspective view of a storage base 50 that is a warehouse of a distribution center according to the present embodiment and stores a load 100 (see Fig. 18B).

A plurality of shelves 52 (for example, indexes are attached to some shelves) are disposed in the storage base 50. As an example, six shelves 52 are arranged in one row, and a so-called "island" is formed in units of two rows. The formation of islands, the number of shelves 52, and the like are not limited to the arrangement of Fig. 18A.

As illustrated in Fig. 18B, the shelf 52 is provided with a plurality of accommodation spaces 52A, and the load 100 can be accommodated in each accommodation space 52A.

In the storage base 50, a plurality of conveyance devices 54 are disposed to be movable in the storage base 50.

An operation of the conveyance device 54 is controlled by a command from a storage base management server 56 that collectively manages control target devices in the storage base 50, and moves, for example, between a predetermined standby position, an arrangement position of the shelves 52, and a picking station 58.

In a case of opposing the shelf 52, the conveyance device 54 can enter a gap at the lower portion of the shelf 52 and lift the shelf, and thus cause the shelf to float from the floor surface of the storage base 50. Therefore, the shelf 52 can be moved to a desired position by the movement of the conveyance device 54.

A plurality of picking stations 58 are disposed at predetermined positions of the storage base 50. Although two picking stations 58 are illustrated in Fig. 18A, one or three or more picking stations 58 may be provided. The humanoid robot 1 is disposed in each picking station 58. Instead of the conveyance device 54, the humanoid robot 1 may be applied. According to the humanoid robot 1, for example, the shelf 52 may be conveyed, and an operation of directly taking out a load 100 from the shelf 52 (for example, the accommodation space 52A) or directly accommodating the load in the shelf 52 (for example, the accommodation space 52A) can be performed.

The configuration and the gripping control of the humanoid robot 1 are similar to those of the first embodiment, and thus the description thereof will be omitted. The gripping control is basically executed by the information processing device 14 mounted on each humanoid robot 1. The gripping control of the humanoid robots 1 existing in the storage base 50 in Fig. 18A may collectively be controlled by the storage base management server 56.

The humanoid robot 1 executes the commanded task based on the cooperation with the information processing device 14 (see Fig. 5) mounted on the humanoid robot 1 under the management of the storage base management server 56.

That is, in each picking station 58, in a case in which the shelf 52 is disposed in a frontage 58A of the picking station 58 by the conveyance device 54, the humanoid robot 1 performs loading work and unloading work of a load 100 in response to a command from the storage base management server 56.

Control of the loading work and the unloading work themselves is controlled by the information processing device 14 (see Fig. 5) of each humanoid robot 1.

In the picking station 58, a task space 58B for sorting and packing is installed together with the frontage 58A in which the shelf 52 is disposed.

The unloading work is a task of taking out a load 100 accommodated in the shelf 52 in accordance with a destination, classifying loads for each sorting destination, and packing the loads into a box 60 (for example, a transport member) for each sorting destination.

The loading work is a task of classifying the load 100 arriving at the warehouse for each of the shelves 52 as storage destinations and disposing the classified load 100 at a predetermined position of the shelf 52.

In the present embodiment, each task of the unloading work and each task of the loading work are defined as follows.

### (Unloading Work 1) Picking task

In this task, the humanoid robot 1 takes out a designated load 100 from the shelf 52 that has arrived at the frontage 58A, and moves the designated load 100 to a task space 19.

### (Unloading Work 2) Assorting task

In this task, the load 100 taken out to the task space 58B is accommodated in the box 60 in accordance with the destination, and packing or the like of the box is performed.

### (Unloading Work 3) Unloading task

The picking task of the shelf 52 disposed in the frontage 58A is completed, and the next shelf 52 is requested.

### (Loading Work 1) Picking task

In this task, a commanded load 100 is taken out from a truck or pallet that has arrived at the frontage 58A and is moved to the task space 58B.

### (Loading Work 2) Assorting task

In this task, the load 100 taken out to the task space 58B is accommodated in the shelf 52 corresponding to a storage destination.

### (Loading Work 3) Loading task

In this task, an assorting task of the shelves 52 disposed in the frontage 58A is completed, and the next shelf 52 is requested.

Here, information regarding the task of each humanoid robot 1 is sequentially transmitted from the information processing device 14 of the humanoid robot 1 to the storage base management server 56. As a result, in the storage base management server 56, information (that is, task progress information) indicating the operation states of a plurality of humanoid robots 1 is collectively managed.

### (Simultaneous Progress Task)

Here, in a comparative example, while the humanoid robot 1 disposed in the picking station 58 performs one unloading work or loading work, the humanoid robot 1 does not perform another one unloading work or loading work.

In some cases, unloading work or loading work of a load 100 different from the load 100 as a task target that is currently in progress is scheduled for the shelf 52 arriving at the frontage 58A of the picking station 58. Here, the shelf 52 has been described as an example, but may be a truck or a pallet.

In a case in which the humanoid robot 1 performs a task of the loading work or the unloading work of the load 100 by using the gripping portion 20R (or 20L) attached to one arm portion 5 (or 6), the gripping portion 20L (or 20R) attached to the other arm portion 6 (or 5) is free (that is, turns into a non-task state).

Therefore, in the present embodiment, in a case in which a predetermined condition is satisfied, the gripping portions 20R and 20L attached to the left and right arm portions 5 and 6 of the single humanoid robot 1 are used in combination to simultaneously progress the two tasks (also simply referred to as a "simultaneous progress task" below).

Such a simultaneous progress task becomes a cause of an erroneous task to be performed by a worker (for example, a person), but can be realized by the humanoid robot 1 executing the unloading work and the loading work instead of the worker.

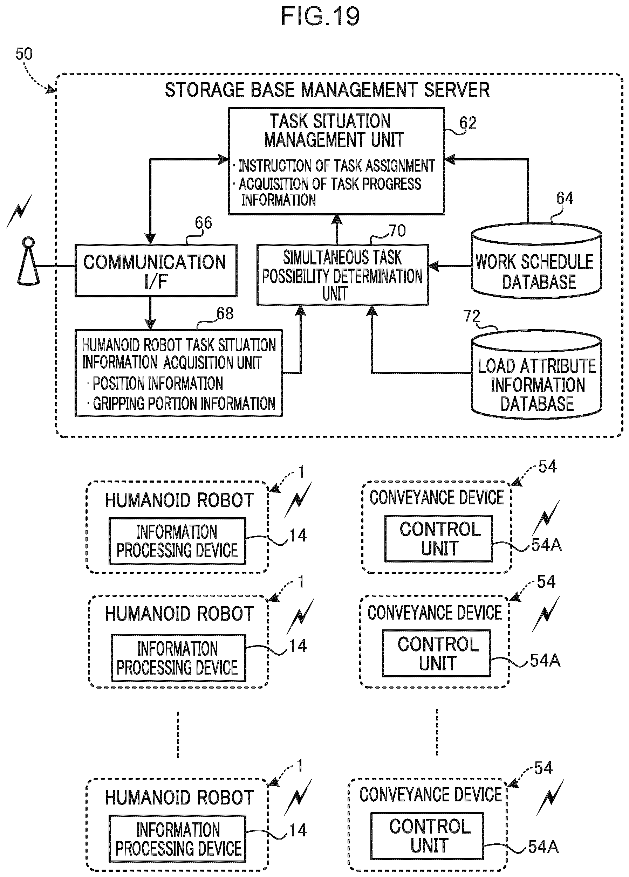

Fig. 19 is a functional block diagram for executing simultaneous progress task control executed in cooperation between the storage base management server 56 and each information processing device 14 of the humanoid robot 1.

The storage base management server 56 includes a task situation management unit 62. The task situation management unit 62 is connected to a work schedule database 64 and a communication I/F 66.

The communication I/F 66 communicates with the information processing device 14 of the humanoid robot 1 and a control device 54A of the conveyance device 54 and transmits and receives information.

The task situation management unit 62 sequentially acquires information regarding a work schedule from the work schedule database 64 and acquires work progress information of a control target (for example, the information processing device 14 of the humanoid robot 1 or the control device 54A of the conveyance device 54) that executes the work on the storage base 50, via the communication I/F 66, thereby managing the work schedule including an assignment instruction of the next work.

The communication I/F 66 is connected to a humanoid robot task situation information acquisition unit 68, and acquires information regarding the task situation (for example, the position of the picking station 58, the identification of the shelf 52 disposed in the frontage 58A, or whether the right or left gripping portion 20 is used) in a case in which the humanoid robot 1 performs the work.

In other words, the humanoid robot task situation information acquisition unit 68 is not important to assign the normal work schedule, but acquires the detailed information of a specific task in the unloading work or the loading work as the work.

The humanoid robot task situation information acquisition unit 68 is connected to a simultaneous task possibility determination unit 70. The work schedule database 64 and a load attribute information database 72 are connected to the simultaneous task possibility determination unit 70.

The simultaneous task possibility determination unit 70 comprehensively analyzes the task situation information from the humanoid robot task situation information acquisition unit 68, the work schedule information from the work schedule database 64, and the load attribute information from the load attribute information database 72, and determines whether or not another task can be assigned to the humanoid robot 1 that is currently executing a predetermined task (for example, the possibility of a simultaneous progress task). In a case in which the simultaneous progress task is possible, the simultaneous task possibility determination unit 70 notifies the task situation management unit 62 of the determination result. As an example in which the simultaneous progress task is possible, there is a case in which there is the arm portion 5 or 6 on a side on which a task is not performed, and the next task is a task on the same shelf 52 (for example, specifying based on task situation information and schedule information), and a load 100 as a task target has a weight and a size (for example, specifying by the attribute information) that can be gripped by the arm portion 5 or 6 on the side on which a task is not performed (that is, a predetermined condition is satisfied).

The task situation management unit 62 normally assigns the next task after receiving a work end notification from the working humanoid robot 1, but before that, assigns the work to the working humanoid robot 1.

More specifically, a situation is assumed in which a specific shelf 52 is disposed in the frontage 58A of a specific picking station 58, and a load is gripped by the gripping portion 20L of the left hand from the accommodation space 52A of the shelf 52 and the picking work is executed.

At this time, in a case in which the load 100 that can be gripped by the gripping portion 20R of the right hand can be picked from the accommodation space 52A of the same specific shelf 52, an instruction to take out two loads in simultaneous progress is issued before the picking work by the gripping portion 20L of the left hand ends (for example, before a series of tasks including once carrying to the task space 58B and packing in the box 60).

### (Flow of Normal Work Assignment Instruction Task)

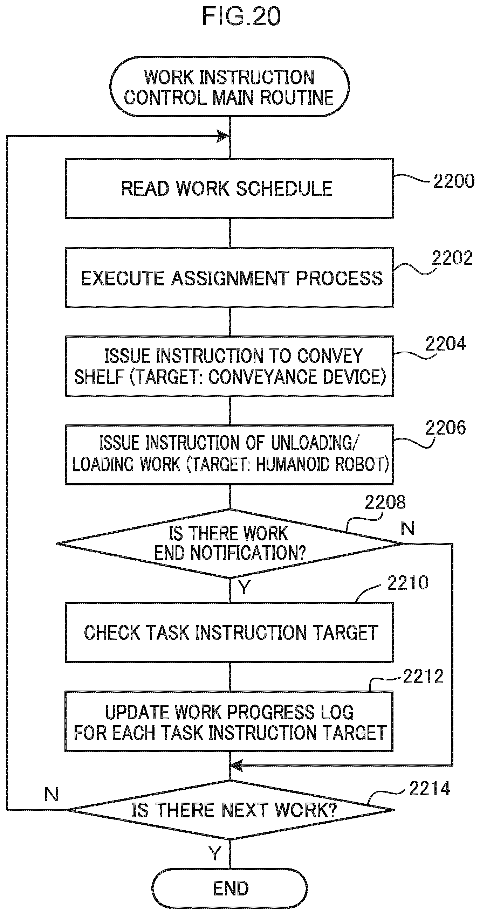

Fig. 20 is a flowchart illustrating a main routine of normal work instruction control based on the work schedule by the storage base management server 56, which is executed in the storage base 50 (see Fig. 18A).

In Step 2200, the work schedule is read, and then the process proceeds to Step 2202 to execute an assignment process. The assignment process in Step 2202 can be executed by using a work sheet or the like describing which conveyance device 54 conveys which shelf 52 to which picking station 58 and which humanoid robot 1 is caused to execute the unloading work or the loading work.

In next Step 2204, the conveyance device 54 is instructed to convey the shelf 52, and then in Step 2206, the humanoid robot 1 is instructed of the unloading work or the loading work, and the process proceeds to Step 2208.

In Step 2208, it is determined whether or not there is the work end notification. In a case in which the determination is affirmative, the process proceeds to Step 2210 to check a task instruction target, and then the process proceeds to Step 2212 to update a work progress log for each task instruction target. Then, the process proceeds to Step 2214.

In a case in which there is no work end notification in Step 2208, the process proceeds to Step 2214 in order to continuously execute other work.

That is, the progress of each work is monitored while the assignment process is performed as needed in accordance with the order set in the work schedule, whereby it is possible to improve the work efficiency of the limited number of conveyance devices 54 and the limited number of humanoid robots 1.

### (Flow of Simultaneous Progress Task)

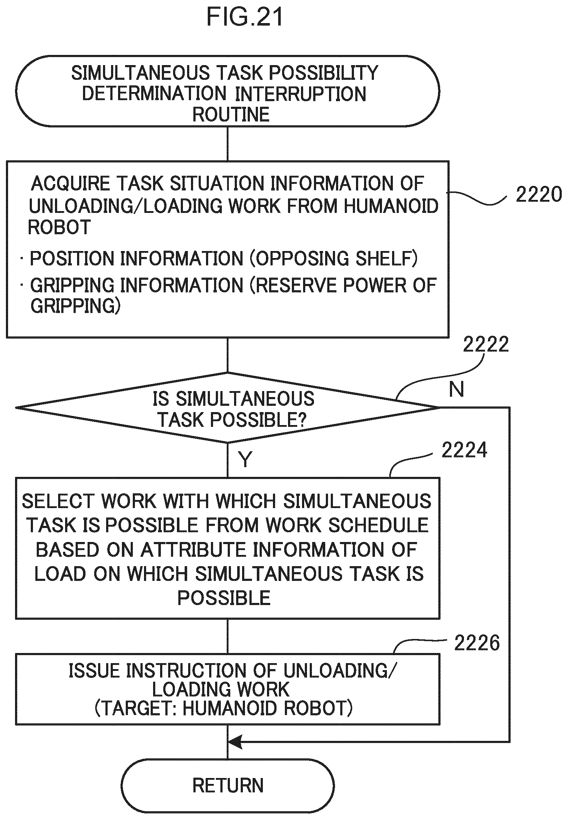

Fig. 21 is a control flowchart illustrating a flow of a simultaneous progress work instruction from determination of whether or not simultaneous progress is possible to an instruction of simultaneous progress to a specific humanoid robot 1, which is executed by appropriately interrupting the main routine illustrated in Fig. 20.

In Step 2220, the task situation information of the unloading work or the loading work from the humanoid robot 1 is acquired. Specifically, the position information (for example, the position of the picking station 58 and the opposing shelf 52) and gripping information (for example, reserve power based on the gripping portion that is performing gripping or the gripping portion that is not performing gripping) of the humanoid robot 1 are acquired.

In next Step 2222, it is determined whether or not a simultaneous task is possible based on the task situation information acquired in Step 2220.

In a case in which the determination is negative in Step 2222, it is determined that the simultaneous task is not possible, and this routine ends. In a case in which the determination is affirmative in Step 2222, it is determined that the humanoid robot 1 is in an environment where the simultaneous task is possible, and the process proceeds to Step 2224.

In Step 2224, in addition to the task situation information, work on which the simultaneous task is possible is selected from the work schedule based on the work schedule and the attribute of the load 100. Specifically, in a case in which the load 100 that can be gripped by the gripping portion 20 (for example, the free gripping portion 20) during non-task of the humanoid robot 1 exists in the accommodation space 52A of the shelf 52 that currently opposes the humanoid robot 1, it is determined that the simultaneous task is possible.

In next Step 2226, an instruction of the unloading work or the loading work is issued to the humanoid robot 1, and this routine ends.

In the humanoid robot 1, while the unloading work or the loading work that is initially instructed is executed by one gripping portion 20, the unloading work or the loading work that is instructed later is executed by the other gripping portion 20, and thus it is possible to improve the efficiency of the task.

As described above, in the present embodiment, with the humanoid robot 1, while the predetermined unloading work or loading work is performed by one gripping portion 20, the condition is satisfied, and another unloading work or loading work is performed by the other gripping portion 20 (that is, in execution of the simultaneous task), whereby it is possible to improve the work efficiency by sufficiently using the reserve power of the humanoid robot 1.

### (Fifth Embodiment)

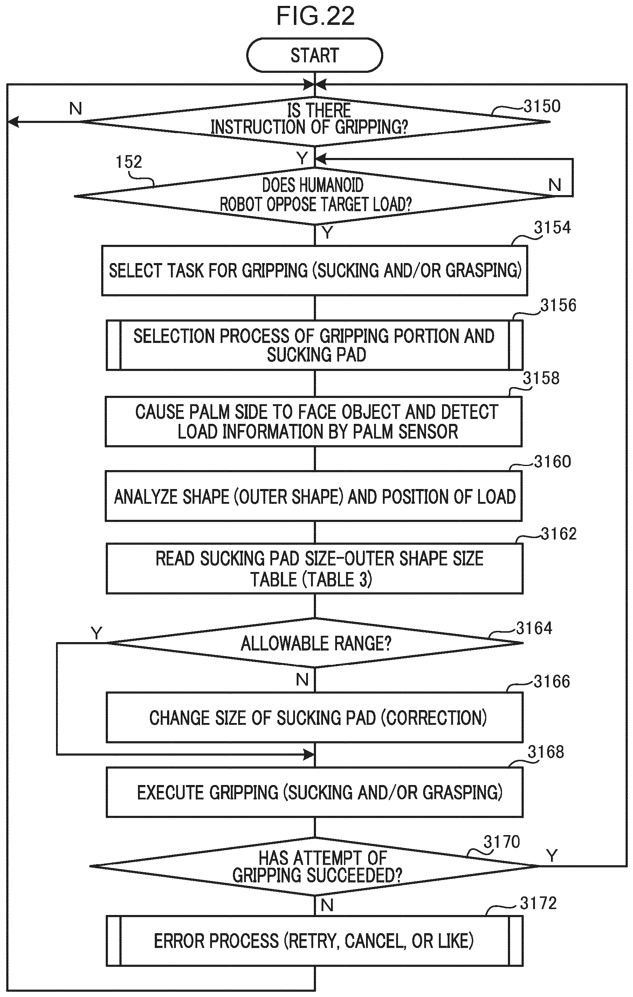

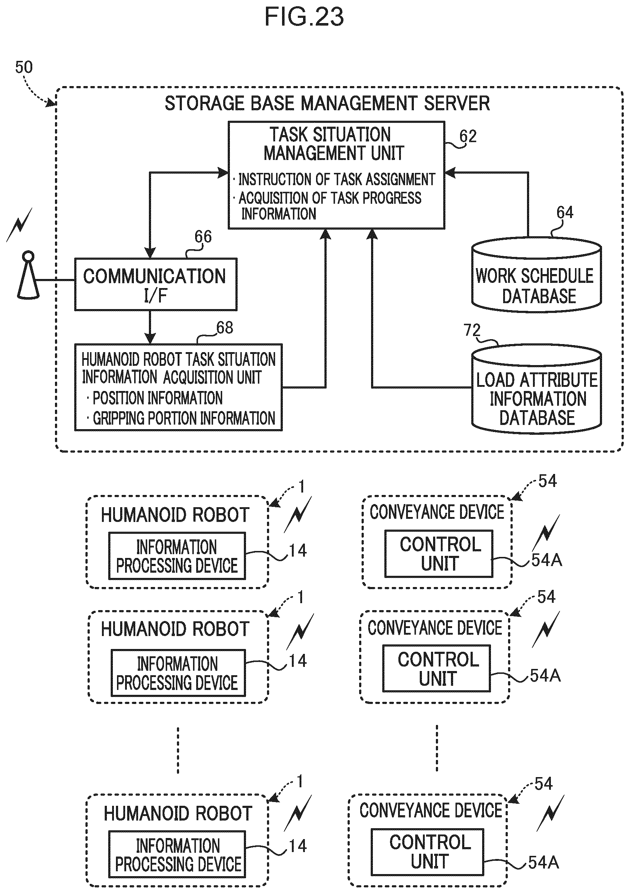

A fifth embodiment of the disclosure will be described with reference to Figs. 22 and 23.

In the fifth embodiment, the same components as those in each of the embodiments may be denoted by the same reference signs, and description thereof may be omitted.

As described in the first embodiment, in the robot 1, the gripping function is selected from one or two arm portions 5 and 6 (finger portions 22A, 22B, or 22C) attached to one humanoid robot 1 based on the weight information of the load 100 that can be known in advance, and the picking of the load 100 is performed by the suction and/or grasping operation.

Since one humanoid robot 1 has a plurality of gripping functions, in addition to the selection of the gripping operation based on the weight information, the humanoid robot 1 can actually approach the load 100, and specify the shape information (for example, the size) of the load 100 from image information detected by the palm sensor 26. In a case in which gripping by the selected arm portions 5 and 6 and the finger portions 22A, 22B, and 22C provided on the arm portions 5 and 6 can become unstable (for example, predetermined shape information (for example, the size) deviates from the allowable range), the humanoid robot 1 can change the gripping form at the site (for example, the opposing state to the load 100).

In the present embodiment, following the selection of the picking task based on the weight information, the change of the picking task based on the shape information (for example, the size) is executed if necessary (for example, by using detection information from the palm sensor 26).

### (Change of Picking Task based on Shape Information (Size))

Here, in Selection Control 1 to Selection Control 6 based on Tables 1 and 2 described in the first embodiment, the size of the suctioning pad 24 is selected based on the weight information of the load 100.

For example, in the determination of the weight, in a case in which the load 100 of which the extra-small size (that is, an extra-small size) is selected based on Selection Control 5 is a predetermined size or more, the gripping state may become unstable depending on the balance of the load 100 after being gripped.

Therefore, in the present embodiment, the change control of the picking task is executed in addition to Selection Control 1 to Selection Control 6 based on Tables 1 and 2 described above.

In the change control, before the humanoid robot 1 opposes the load 100 and performs the gripping, the appearance of the actual load 100 is captured by using the palm sensor 26 to acquire the shape information (for example, the size), whether or not the outer appearance is within the allowable range of the shape information (for example, the size) of the selected suctioning pad 24 is determined based on a suctioning pad size-shape allowable range table stored in advance, and the selected suctioning pad 24 is changed in the case of the shape information (for example, the size) that deviates from the allowable range and has a predetermined value or more.

In performing the change control, the information processing device 14 of the humanoid robot 1 stores the suctioning pad size-shape allowable range table (see Table 5) in advance.

Here, in a case in which the humanoid robot 1 is directed to the gripping site and opposes the load 100, the humanoid robot 1 captures an image of the load 100 with the palm sensor 26, and acquires the shape information (for example, the size) from the captured image information.

The information processing device 14 determines whether or not the acquired shape information is within the allowable range of the selected suctioning pad size, and changes the suctioning pad size in a case in which the acquired shape information is out of the allowable range.

**[Table 5]**

| Selection and allowable range of Sucking Arm | | |
|---|---|---|
| Object size | Suitable for | Load shape allowable range (volume V AND/OR dimension L |
| | | "vertical direction, horizontal direction, depth direction") |
| Extra-Large | Right hand | Minimum volume Vmin or less AND dimension L in any of vertical direction, horizontal direction, and depth direction is equal to or less than predetermined value |
| Large | Left hand palm | Minimum volume Vmin or less OR dimension L in any of vertical direction, horizontal direction, and depth direction is equal to or less than predetermined value |
| Medium | Left 2 fingers | No restriction |
| Small | Left 1 finger | Maximum volume Vmax or more OR dimension L in any of vertical direction, horizontal direction, and depth direction is equal to or more than predetermined value |
| Extra-Small | Left 1 finger | Maximum volume Vmax or more AND dimension L in any of vertical direction, horizontal direction, and depth direction is equal to or more than predetermined value |
| * In case of being out of allowable range, shift "Object size" one by one | | |
| * Finally, converge to "Medium" having high versatility | | |

### (Gripping Control of Load 100)

Fig. 22 is a flowchart illustrating a procedure of the gripping control in a case in which the load 100 is gripped by the gripping portion 20, which is the operation required for the unloading work and the loading work, in conjunction with the whole operation of the humanoid robot 1.

In Step 3150, it is determined whether or not an instruction to grip the load 100 is issued. In a case in which the determination is affirmative, the process proceeds to Step 3152, the humanoid robot 1 is moved (for example, the arm portions 5 and 6 are operated), the palm side 20A is caused to oppose the load 100 as the target, and the process proceeds to Step 3154.

In Step 3154, a task for gripping the load 100 is selected. For example, selection is performed from only "suction", only "grasping", a combination of "suction" and "grasping", and the like. Then, the process proceeds to Step 3156 to execute the selection process of the gripping portion 20 and the suctioning pad 24 (for details, see Fig. 8) in accordance with the attribute of the load 100, and the process proceeds to Step 3158.

In Step 3158, the palm side 20A is caused to face the load, and the information of the load 100 is detected from the information (for example, an image captured by the high-resolution camera, and position information detected by the MoPU) detected by the palm sensor 26.

In next Step 3160, the detection information by the palm sensor 26 is analyzed to ascertain the type (for example, the shape, the size, and the hardness) and position of the load 100 in detail, and the process proceeds to Step 3162.

In Step 3162, the suctioning pad size-shape allowable range table (see Table 5) stored in advance in the information processing device 14 is read. Then, the process proceeds to Step 3164 to determine whether or not the size of the selected suctioning pad 24 is within the allowable range for the load 100 to be gripped.

In a case in which the determination is negative in Step 3164, the process proceeds to Step 3166, the size of the suctioning pad 24 is changed based on Table 5, and the process proceeds to Step 3168.

In a case in which the determination is affirmative in Step 3164, there is no need to make a change, and thus the process proceeds to Step 3168.

In Step 3168, gripping (for example, only "suction", only "grasping", or "suction" and "grasping") of the load 100 is executed.

In next Step 3170, it is determined whether or not an attempt to grip the load 100 has succeeded. In a case in which the determination is affirmative, the gripped load 100 is carried to a predetermined place. Then, the process proceeds to Step 3150 and the robot waits for an instruction to grip the next load 100.

In addition, in a case in which the determination is negative in Step 3170, the process proceeds to Step 3172, an error process (for example, retry or cancellation) is executed, and the process returns to Step 3150.

### (Control system of Unloading Work and Loading Work Task in Storage Base)

In the present embodiment, the humanoid robot 1 may be used for the task in the storage base 50 similarly to the fourth embodiment. Fig. 23 is a functional block diagram of a control system for executing the unloading work and the loading work executed in cooperation between the storage base management server 56 and each information processing device 14 of the humanoid robot 1.

The storage base management server 56 includes a task situation management unit 62. The task situation management unit 62 is connected to the work schedule database 64, the load attribute information database 72, and the communication I/F 66.

The communication I/F 66 communicates with the information processing device 14 of the humanoid robot 1 and a control device 54A of the conveyance device 54 and transmits and receives information.

The task situation management unit 62 sequentially acquires information regarding a work schedule from the work schedule database 64 and acquires work progress information of a control target (for example, the information processing device 14 of the humanoid robot 1 or the control device 54A of the conveyance device 54) that executes the work on the storage base 50, via the communication I/F 66, thereby managing the work schedule including an assignment instruction of the next work.

The communication I/F 66 is connected to a humanoid robot task situation information acquisition unit 68, and acquires information regarding the task situation (for example, the position of the picking station 58, the identification of the shelf 52 disposed in the frontage 58A, or whether the right or left gripping portion 20 is used) in a case in which the humanoid robot 1 performs the work.

In other words, the humanoid robot task situation information acquisition unit 68 is not important to assign the normal work schedule, but acquires the detailed information of a specific task in the unloading work or the loading work as the work.

The humanoid robot task situation information acquisition unit 68 is connected to the task situation management unit 62.

The task situation management unit 62 comprehensively analyzes the task situation information from the humanoid robot task situation information acquisition unit 68, the work schedule information from the work schedule database 64, and the load attribute information from the load attribute information database 72, collates the current progress with the schedule, and manages the whole.

The task situation management unit 62 normally assigns the next task after receiving a work end notification from the working humanoid robot 1, and assigns the work to the working humanoid robot 1 depending on the cases.

More specifically, a situation is assumed in which a specific shelf 52 is disposed in the frontage 58A of a specific picking station 58, and a load 100 is gripped from the accommodation space 52A of the shelf 52 to execute the picking work. In a case in which the load 100 can be picked from the accommodation space of the same specific shelf 52, it is possible to issue an instruction of continuation of the work at the position as it is (for example, without returning to the home position or the like after the end of the work).

Also in the present embodiment, the normal work assignment instruction task is executed in the storage base 50. The flow of the normal work assignment instruction task in the present embodiment is similar to the flowchart illustrated in Fig. 20 in the fourth embodiment, and thus the description thereof is omitted here.

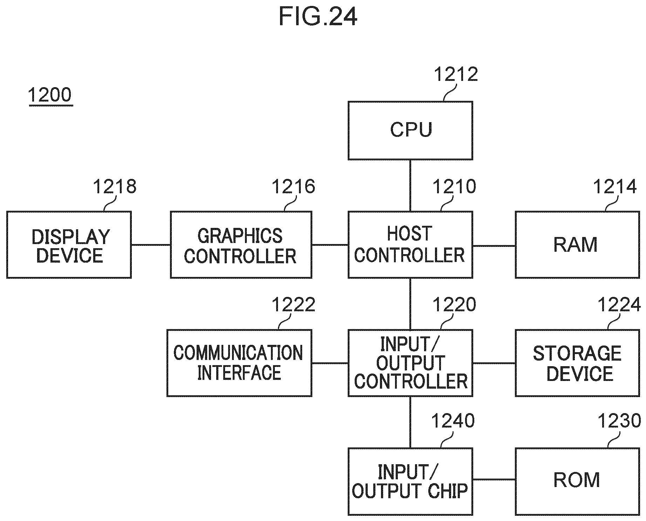

Fig. 24 schematically illustrates an example of a hardware configuration of a computer 1200 that functions as the information processing device 14 in each of the embodiments. A program installed in the computer 1200 can cause the computer 1200 to function as one or more "units" of the device according to each of the embodiments, or cause the computer 1200 to execute operations associated with the device according to each of the embodiments or one or more "units" of the apparatus, and/or cause the computer 1200 to execute a process according to each of the embodiments or a stage of the process. Such a program may be executed by a CPU 1212, thereby causing the computer 1200 to execute a specific operation associated with some or all of the blocks in the flowcharts and block diagrams described herein.

The computer 1200 according to each of the embodiments includes the CPU 1212, a RAM 1214, and a graphics controller 1216, which are connected to each other by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and input/output units such as a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. Information processing described in these programs is read by the computer 1200 and provides cooperation between the programs and the various types of hardware resources. The apparatus or method may be configured by implementing operations or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on a recording medium.

In addition, the CPU 1212 may cause the RAM 1214 to read all or a necessary part of a file or database stored in an external recording medium such as the storage device 1224, a DVD drive (DVD-ROM), an IC card, or the like, and may execute various types of processing on data on the RAM 1214. Then, the CPU 1212 may write back the processed data to an external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and designated by a command sequence of a program, and writes back the results to the RAM 1214. The CPU 1212 may retrieve information in a file, a database, or the like in the recording medium. For example, in a case in which a plurality of entries each having the attribute value of a first attribute associated with an attribute value of a second attribute are stored in a recording medium, the CPU 1212 may retrieve an entry in which the attribute value of the first attribute coincides with the designated condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. A recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in each of the embodiments may represent stages of a process in which an operation is performed or "units" of a device that are responsible for performing the operation. Specific stages and "units" may be implemented by dedicated circuits, programmable circuits provided with computer-readable instructions stored on a computer-readable storage medium, and/or a processor provided with computer-readable instructions stored on a computer-readable storage medium. Dedicated circuits may include digital and/or analog hardware circuits, and may include integrated circuits (ICs) and/or discrete circuits. The programmable circuit may include reconfigurable hardware circuits including, for example, logical products, disjunction, exclusive disjunction, NAND, NOR, and other logical operations, flip-flops, registers, and memory elements, such as field programmable gate arrays (FPGA) and programmable logic arrays (PLA).

The computer-readable storage medium may include any tangible device capable of storing instructions for execution by a suitable device, such that a computer-readable storage medium having instructions stored thereon includes an article of manufacture including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of a general purpose computer, special purpose computer, or other programmable data processing apparatus, or programmable circuits, either locally or over a wide area network (WAN), such as a local area network (LAN), the Internet, or the like, to cause the processor or a programmable circuit of the general purpose computer, special purpose computer, or other programmable data processing apparatus to execute the computer-readable instructions to generate means for the processor or programmable circuitry to perform the operations specified in the flowcharts or block diagrams. Examples of the processor include a computer processor, a processing unit, a microprocessor, a digital signal processor, a control section, a microcontrol section, and the like.

Although the disclosure has been described with reference to the embodiments, the technical scope of the disclosure is not limited to the scope described in the embodiments. It is apparent to those skilled in the art that various changes or improvements can be made to the embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even though the operation flow in the claims, the specification, and the drawings is described using "first", "next", and the like for convenience, it does not mean that it is essential to perform in this order.

The disclosures of Japanese Patent Application No. 2022-195945 filed on December 7, 2022, Japanese Patent Application No. 2023-026590 filed on February 22, 2023, Japanese Patent Application No. 2023-029478 filed on February 28, 2023, Japanese Patent Application No. 2023-036898 filed on March 9, 2023, and Japanese Patent Application No. 2023-040062 filed on March 14, 2023 are incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A control system for a robot including a first gripping portion including a palm portion as a base for gripping a target object and a plurality of finger portions radially extending from the palm portion, and a second gripping portion including a holding body capable of gripping and holding the target object, the robot being capable of gripping the target object by the first gripping portion and the second gripping portion, the control system comprising:
a plurality of types of suctioning pads that are selectively provided for each of the palm portion and the finger portions of the first gripping portion, and that are capable of suctioning and gripping the target object with different suctioning areas; and
a control unit that selects any one of a first function of gripping the target object by the first gripping portion, a second function of gripping the target object by the second gripping portion, and a third function using both the first function and the second function, as a function of gripping the target object, by a property including at least a shape and a weight of the target object, and that controls an operation of gripping the target object.

2. The control system for a robot according to claim 1, wherein:
in the first gripping portion, a plurality of the finger portions are provided, a suctioning pad having a smaller diameter than other suctioning pads is attached to a tip portion of at least one finger portion, and a suctioning pad having a larger diameter than other suctioning pads is attached to a tip portion of another finger portion other than the one finger portion, and
the control unit selects any one of the first function, the second function, and the third function based on the property and controls the operation of gripping the target object.

3. The control system for a robot according to claim 1, wherein:
in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion;
the control unit classifies the target object into an extra-large size, a large size, a medium size, a small size, and an extra-small size based on the property; and
the control unit:
selects gripping by using the holding body provided at the second gripping portion in a case in which the target object has the extra-large size,
selects gripping by using the suctioning pad provided at the palm portion in a case in which the target object has the large size,
selects gripping by using the suctioning pad that has the large diameter and is provided at the tip portions of the second finger portion and the third finger portion in a case in which the target object has the medium size,
selects gripping by using the suctioning pad that has the large diameter and is provided at the tip portion of the second finger portion or the third finger portion in a case in which the target object has the small size, and
selects gripping by using the suctioning pad that has the small diameter and is provided at the tip portion of the first finger portion in a case in which the target object has the extra-small size.

4. The control system for a robot according to claim 1, wherein a suctioning pad is applied as the holding body of the second gripping portion.

5. The control system for a robot according to claim 1, further comprising:
a palm sensor unit that is provided at the first gripping portion and the second gripping portion, and that detects target object information including a shape and a position of the target object,
wherein the palm sensor unit includes a camera that captures an image of the target object and that identifies a type of the target object, and a motion processing unit that specifies the position of the target object.

6. The control system for a robot according to claim 1, wherein it is determined whether or not the target object is within a predetermined criterion capable of being gripped by a single robot, by using weight information among the properties of the target object, and in a case in which the predetermined criterion is exceeded, a plurality of robots are gathered, and the target object is gripped through cooperation among the plurality of robots.

7. The control system for a robot according to claim 6, wherein
the control unit sets a gripping point of each of the plurality of robots for the target object, calculates a load ratio shared by each robot at the set gripping point based on the property of the target object, and selects the function of gripping the target object for each robot based on a calculation result.

8. The control system for a robot according to claim 6, wherein, in a case in which the plurality of robots grip and convey the target object, a conveyance route of each robot is set such that an inertial force applied to the target object is minimized.

9. A control program for a robot that causes a computer to operate as the control unit according to any one of claims 1 to 8.

10. A control system for a robot including a standard gripping portion that is detachably mounted at an arm portion of the robot and that grips a target object conforming to a predetermined criterion, and one or a plurality of extra gripping portions that are detachably attached to the arm portion and that grip a target object not conforming to the criterion, the control system comprising:
a determination unit that determines whether or not the target object conforms to a predetermined standard; and
a control unit that controls an operation of mounting the standard gripping portion at the arm portion in a case in which a determination result of the determination unit conforms to the standard, and that controls an operation of mounting the extra gripping portion at the arm portion and gripping the target object in a case in which the determination result of the determination unit does not conform to the standard.

11. The control system for a robot according to claim 10, wherein:
the robot includes a plurality of arm portions, and
an attachment and detachment operation of the standard gripping portion or the extra gripping portion to/from one of the arm portions is executed by using the standard gripping portion or the extra gripping portion mounted at another of the arm portions.

12. The control system for a robot according to claim 10, further comprising:
a sensor unit that is provided at the standard gripping portion and the extra gripping portion, and that detects target object information including a type, a shape, or a size of the target object and a position of the target object,
wherein the determination unit determines whether or not the target object conforms to the standard, based on the target object information detected by the sensor unit.

13. The control system for a robot according to claim 12, wherein the determination unit makes a determination based on the target object information detected by the sensor unit or a weight that can be known in advance.

14. The control system for a robot according to claim 12, wherein the sensor unit includes a camera that captures an image of the target object and that identifies a type of the target object, and a motion processing unit that specifies the position of the target object.

15. The control system for a robot according to claim 10, wherein:
the standard gripping portion includes a first gripping portion including a palm portion serving as a base for gripping the target object and a plurality of finger portions radially extending from the palm portion, and to which a suctioning pad capable of suctioning and gripping the target object with a different suctioning area is attached for each of the palm portion and the finger portions, and a second gripping portion including a holding body capable of gripping and holding the target object, and
in the gripping of the target object by the standard gripping portion, the control unit selects any one of a first function of gripping the target object by the first gripping portion, a second function of gripping the target object by the second gripping portion, and a third function of using both the first function and the second function, as a function of gripping the target object, by an attribute including at least a shape and a weight of the target object, and controls an operation of gripping the target object.

16. The control system for a robot according to claim 15, wherein:
in the gripping of the target object by the standard gripping portion, in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion;
the control unit classifies the target object into an extra-large size, a large size, a medium size, a small size, and an extra-small size based on the attribute; and
the control unit:
selects gripping by using the holding body provided at the second gripping portion in a case in which the target object has the extra-large size,
selects gripping by using the suctioning pad provided at the palm portion in a case in which the target object has the large size,
selects gripping by using the suctioning pad that has the large diameter and is provided at the tip portions of the second finger portion and the third finger portion in a case in which the target object has the medium size,
selects gripping by using the suctioning pad that has the large diameter and is provided at the tip portion of the second finger portion or the third finger portion in a case in which the target object has the small size, and
selects gripping by using the suctioning pad that has the small diameter and is provided at the tip portion of the first finger portion in a case in which the target object has the extra-small size.

17. A control program for a robot that causes a computer to operate as the determination unit and the control unit according to any one of claims 10 to 16.

18. A control system for a robot that includes a plurality of gripping portions having different gripping functions as a gripping function for gripping a target object, the robot being capable of gripping the target object by a selected gripping portion, the control system comprising:
a normal task control unit that selects at least one of the gripping portions, and that controls a gripping task including gripping of a first target object designated from target objects; and
a simultaneous task control unit that selects another of the gripping portions, and that controls a gripping task including gripping of a second target object designated from the target objects, in a case in which a predetermined condition is satisfied, during execution of a task by the normal task control unit.

19. The control system for a robot according to claim 18, wherein the predetermined condition is a condition under which the second target object can be gripped, the condition being found from task situation information including position information of the robot and gripping information for specifying the gripping portion that grips the target object, work schedule information under a task environment of the robot, and attribute information of a target object as a gripping target.

20. The control system for a robot according to claim 18, wherein:
in a warehouse including a storage base on which a plurality of shelves at which a plurality of the target objects are stored are displayed, and a picking station that executes unloading work for taking out a target object from a shelf and loading work for accommodating the target object at the shelf, the robot is disposed at the picking station, and
a storage base management server that instructs the robot on the unloading work including the gripping task and the loading work functions as the normal task control unit and the simultaneous task control unit, thereby causing the robot to execute the gripping task of the target object.

21. The control system for a robot according to claim 18, wherein:
the plurality of gripping portions include a first gripping portion including a palm portion serving as a base and a plurality of finger portions radially extending from the palm portion, the first gripping portion being capable of gripping the target object by either suction or grasping, and a second gripping portion capable of suctioning and gripping the target object with a maximum suction force, and
the normal task control unit and the simultaneous task control unit select any one of a first function of gripping the target object by the first gripping portion, a second function of gripping the target object by the second gripping portion, and a third function of using both the first function and the second function, as a function of gripping the target object, by an attribute including at least a shape and a weight of the target object.

22. The control system for a robot according to claim 21, wherein:
in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion;
the normal task control unit and the simultaneous task control unit classify the target object into an extra-large size, a large size, a medium size, a small size, and an extra-small size based on the attribute; and
the normal task control unit and the simultaneous task control unit:
select gripping by using the second gripping portion in a case in which the target object has the extra-large size,
select gripping by using the suctioning pad provided at the palm portion in a case in which the target object has the large size,
select gripping by using the suctioning pad that has the large diameter and is provided at the tip portions of the second finger portion and the third finger portion in a case in which the target object has the medium size,
select gripping by using the suctioning pad that has the large diameter and is provided at the tip portion of the second finger portion or the third finger portion in a case in which the target object has the small size, and
select gripping by using the suctioning pad that has the small diameter and is provided at the tip portion of the first finger portion in a case in which the target object has the extra-small size.

23. The control system for a robot according to claim 18, further comprising:
a sensor unit that is provided at the gripping portion, and that detects target object information including a shape and a position of the target object,
wherein the sensor unit includes a camera that captures an image of the target object and that identifies a type of the target object, and a motion processing unit that specifies the position of the target object.

24. A control program for a robot that causes a computer to operate as the normal task control unit and the simultaneous task control unit according to any one of claims 18 to 23.

25. A control system for a robot capable of gripping a target object by using a first gripping portion including a palm portion serving as a base for gripping the target object and a plurality of finger portions attached to the palm portion, and a second gripping portion including a holding body capable of gripping and holding the target object, the control system comprising:
a plurality of types of suctioning pads that are selectively provided for each of the palm portion and the finger portions of the first gripping portion, and that are capable of suctioning and gripping the target object with different suctioning areas;
a sensor unit that is provided at the first gripping portion and the second gripping portion, and that detects at least shape information of the target object;
a selection unit that selects any one of a first function of gripping the target object by the first gripping portion, a second function of gripping the target object by the second gripping portion, and a third function of using both the first function and the second function, as a function of gripping the target object, based on weight information of the target object registered in advance;
a control unit that controls an operation of gripping the target object based on the function selected by the selection unit;
a determination unit that determines whether or not shape information of the target object detected by the sensor unit during an approaching operation to the target object in a gripping operation by the control unit is within an allowable range of the function of gripping the target object selected by the selection unit; and
a change unit that changes the function of gripping the target object in a case in which the determination unit determines that the shape information is out of the allowable range.

26. The control system for a robot according to claim 25, wherein the determination unit makes a determination based on a table in which the function of gripping the target object and the allowable range of the shape information of the target object are associated with each other.

27. The control system for a robot according to claim 25, wherein the sensor unit includes a camera that captures an image of the target object and that identifies a type of the target object, and a motion processing unit that specifies a position of the target object.

28. The control system for a robot according to claim 25, wherein:
in the first gripping portion, three of the finger portions are provided, a suctioning pad having a smaller diameter than other suctioning pads is attached to a tip portion of a first finger portion, and a suctioning pad having a larger diameter than other suctioning pads is attached to tip portions of a second finger portion and a third finger portion;
the control unit classifies the target object into an extra-large size, a large size, a medium size, a small size, and an extra-small size as a weight classification size based on the weight information; and
the control unit:
selects gripping by using the holding body provided at the second gripping portion in a case in which the target object has the extra-large size,
selects gripping by using the suctioning pad provided at the palm portion in a case in which the target object has the large size,
selects gripping by using the suctioning pad that has the large diameter and is provided at the tip portions of the second finger portion and the third finger portion in a case in which the target object has the medium size,
selects gripping by using the suctioning pad that has the large diameter and is provided at the tip portion of the second finger portion or the third finger portion in a case in which the target object has the small size, and
selects gripping by using the suctioning pad that has the small diameter and is provided at the tip portion of the first finger portion in a case in which the target object has the extra-small size.

29. A control program for a robot that causes a computer to operate as the selection unit, the control unit, the determination unit, and the change unit according to any one of claims 25 to 28.
